# EUROPEAN PATENT SPECIFICATION

(11) **EP 3 584 772 B1**
(45) Date of publication and mention of the grant of the patent: **04.09.2024**
(21) Application number: 17896540.6
(22) Date of filing: 17.02.2017
(51) Int. Cl.: G07G 1/12, G06Q 20/20, G07G 1/00, G07G 1/14

(54) **POS SYSTEM AND PAYMENT METHOD**
POS-SYSTEM UND BEZAHLVERFAHREN
SYSTÈME POS ET PROCÉDÉ DE RÈGLEMENT

(43) Date of publication of application: 25.12.2019
(73) Proprietor: Fujitsu Frontech Limited, Inagi-shi, Tokyo 206-8555 (JP)
(72) Inventor: WATANABE, Mitsuo, Inagi-shi Tokyo 206-8555 (JP); OHKAWA, Masanori, Inagi-shi Tokyo 206-8555 (JP); MATSUI, Nobuhiro, Inagi-shi Tokyo 206-8555 (JP); MIYAKE, Toshimasa, Inagi-shi Tokyo 206-8555 (JP)
(74) Representative: Hoffmann Eitle
(86) International application number: PCT/JP2017/005936
(87) International publication number: WO 2018/150545

(56) References cited:
- EP-A1- 2 187 360
- JP-A- 2009 193 348
- JP-A- 2012 128 715
- JP-A- 2013 073 347
- JP-A- S62 226 299
- US-A- 4 893 237
- US-A1- 2007 016 481
- US-A1- 2010 312 377
- US-A1- 2013 024 304
- US-A1- 2014 290 539

## Description

### Technical Field

The embodiments discussed herein relate to a POS system and a payment method.

### Background Art

Point of sale (POS) systems are introduced in supermarkets, pharmacies, and the like. A POS system includes a set of one POS terminal apparatus and one cash processing apparatus connected to the POS terminal apparatus. The POS terminal apparatus registers an item to be purchased according to a cashier's operation and calculates a payment amount for the item. The POS terminal apparatus also calculates change based on money received from a customer for the payment amount. The received money the customer has paid to the cashier is fed by the cashier into the cash processing apparatus, and the cash processing apparatus dispenses the change to the cashier. A plurality of POS systems having such a configuration are introduced, and a cashier is positioned at each of the POS systems (see, for example, Patent Literature 1).

### Citation List

### Patent Literature

PTL1: Japanese Laid-open Patent Publication No. 2014-186528
US 2014/290539 A1 describes a register system in which a plurality of register units including a register and a money settlement device is provided, the plurality of register units includes a base unit and a terminal unit. A money settlement device of the base unit includes a money storing unit arranged in a safe, an interior of which only a person having specific authority is allowed to access. In addition, the base unit is configured to perform a replenishing process and a collecting process with respect to the terminal unit.

### Summary of Invention

### Technical Problem

A cash processing apparatus included in a POS system entails high cost. Introducing a plurality of POS systems imposes the need of the same number of cash processing apparatuses, which causes a problem of increase in investment in equipment.

In one aspect, it is therefore an object of the present invention to provide an POS system and a payment method that contribute to the reduction in investment in equipment.

### Solution to Problem

In one aspect, there is provided a POS system including: a first POS terminal apparatus including a first accounting unit that calculates a first payment amount for a first registered item, a first calculation unit that calculates first change based on first received money and the first payment amount, and a first cash-dispensing requesting unit that outputs a first cash-dispensing request for the first change; a second POS terminal apparatus including a second accounting unit that calculates a second payment amount for a second registered

The present invention is defined in the appended independent claims. Advantageous Effects of Invention

In one aspect, the proposed technique makes it possible to reduce investment in equipment.

The above and other objects, features and advantages of the present invention will become apparent from the following description in conjunction with the accompanying drawings which illustrate preferred embodiments of the present invention by way of example.

### Brief Description of Drawings

[FIG. 1] FIG. 1 illustrates a POS system according to a first embodiment.
[FIG. 2] FIG. 2 illustrates an example of a POS system according to a second embodiment.
[FIG. 3] FIG. 3 illustrates an example of a hardware configuration of a cash processing apparatus according to the second embodiment.
[FIG. 4] FIG. 4 illustrates an example of a hardware configuration of a POS terminal apparatus according to the second embodiment.
[FIG. 5] FIG. 5 is a sequence diagram illustrating an example of payment processes performed in the POS system according to the second embodiment.
[FIG. 6] FIG. 6 is a functional block diagram that illustrates processing executed by the POS terminal apparatuses and the cash processing apparatus in the POS system according to the second embodiment.
[FIG. 7] FIG. 7 illustrates a flowchart of a payment process performed by the POS terminal apparatuses according to the second embodiment (part 1).
[FIG. 8] FIG. 8 illustrates the flowchart of a payment process performed by the POS terminal apparatuses according to the second embodiment (part 2).
[FIG. 9] FIG. 9 illustrates an example of a display screen at a payment process on a display of the POS terminal apparatus according to the second embodiment.
[FIG. 10] FIG. 10 illustrates an example of a display screen subsequent to payment information transmission on the display of the POS terminal apparatus according to the second embodiment.
[FIG. 11] FIG. 11 illustrates an example of a POS system according to a third embodiment.
[FIG. 12] FIG. 12 is a sequence diagram illustrating an example of payment processes performed in the POS system according to the third embodiment.
[FIG. 13] FIG. 13 is a functional block diagram that illustrates processing performed by POS terminal apparatuses and a cash processing apparatus in the POS system according to the third embodiment.
[FIG. 14] FIG. 14 is a flowchart of a payment registration process performed by a POS terminal apparatus according to the third embodiment.
[FIG. 15] FIG. 15 illustrates a flowchart of a payment execution process performed by the POS terminal apparatus according to the third embodiment (part 1).
[FIG. 16] FIG. 16 illustrates the flowchart of a payment execution process performed by the POS terminal apparatus according to the third embodiment (part 2).
[FIG. 17] FIG. 17 illustrates an example of a display screen on a display for the cash processing apparatus according to the third embodiment when a payment is queued (part 1).
[FIG. 18] FIG. 18 illustrates an example of a display screen on the display for the cash processing apparatus according to the third embodiment when a payment is queued (part 2).
[FIG. 19] FIG. 19 illustrates an example of a display screen on the display for the cash processing apparatus according to the third embodiment when a payment is made (part 1).
[FIG. 20] FIG. 20 illustrates an example of a display screen on the display for the cash processing apparatus according to the third embodiment when a payment is made (part 2) .
[FIG. 21] FIG. 21 illustrates an example of a POS system according to a fourth embodiment.
[FIG. 22] FIG. 22 is a sequence diagram illustrating an example of a payment process performed in the POS system according to the fourth embodiment.
[FIG. 23] FIG. 23 is a functional block diagram that illustrates processing executed by a management server, POS terminal apparatuses, and a cash processing apparatus in the POS system according to the fourth embodiment.
[FIG. 24] FIG. 24 illustrates an example of a POS system according to a fifth embodiment.
[FIG. 25] FIG. 25 is a sequence diagram illustrating one example of payment processes performed in the POS system according to the fifth embodiment.
[FIG. 26] FIG. 26 is a functional block diagram that illustrates processing executed by a management server, POS terminal apparatuses, and a cash processing apparatus in the POS system according to the fifth embodiment.

### Description of Embodiments

Embodiments will be described below with reference to the accompanying drawings. The first embodiment, the second embodiment, the fourth embodiment, and the fifth embodiment described below are present for illustration purposes only; the appended claims are directed to the third embodiment.

### [First Embodiment]

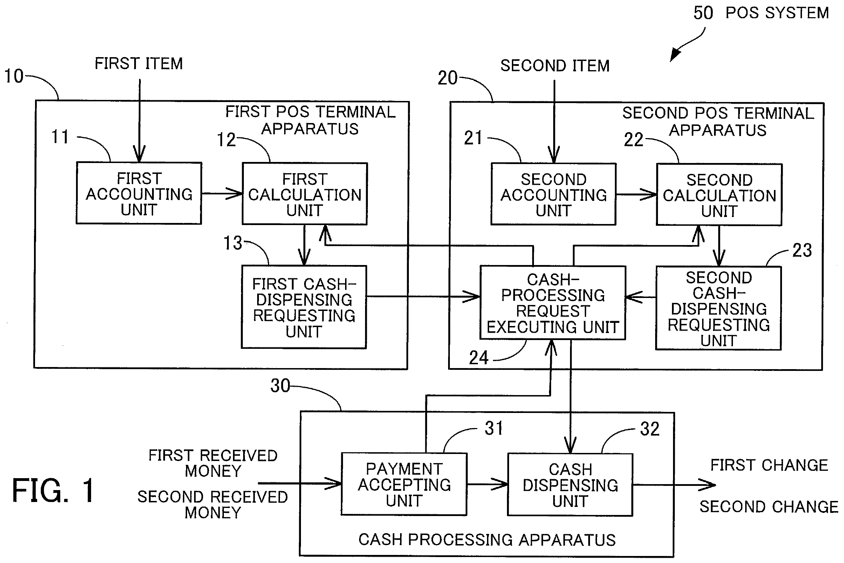

A POS system according to a first embodiment will be described below with reference to FIG. 1.

FIG. 1 illustrates a POS system according to a first embodiment.

A POS system 50 is a system to be introduced into a supermarket, pharmacy, and the like. The POS system 50 includes a first POS terminal apparatus 10, a second POS terminal apparatus 20, and a cash processing apparatus 30. The first POS terminal apparatus 10 and the cash processing apparatus 30 are individually connected to the second POS terminal apparatus 20. In the POS system 50, cashiers are placed at the first and second POS terminal apparatuses 10 and 20 (not illustrated).

The first POS terminal apparatus 10 registers items that a customer buys and calculates a payment amount for the items. The first POS terminal apparatus 10 includes a first accounting unit 11, a first calculation unit 12, and a first cash-dispensing requesting unit 13.

The first accounting unit 11 calculates a first payment amount for a first item that has been registered.

The first calculation unit 12 calculates first change based on first received money and the first payment amount.

The first cash-dispensing requesting unit 13 outputs a first cash-dispensing request for the first change.

By the way, FIG. 1 for the first embodiment illustrates one first POS terminal apparatus 10. However, more than one first POS terminal apparatus 10 may be arranged and individually connected to the second POS terminal apparatus 20.

The second POS terminal apparatus 20 is connected to the first POS terminal apparatus 10, also registers items that a customer buys, and then calculates a payment amount for the items as with the first POS terminal apparatus 10. Further, the second POS terminal apparatus 20 is connected to the cash processing apparatus 30 described below. The second POS terminal apparatus 20 includes a second accounting unit 21, a second calculation unit 22, a second cash-dispensing requesting unit 23, and a cash-processing request executing unit 24.

The second accounting unit 21 calculates a second payment amount for a second item that has been registered.

The second calculation unit 22 calculates second change based on second received money and the second payment amount.

The second cash-dispensing requesting unit 23 outputs a second cash-dispensing request for the second change.

Upon receipt of the first cash-dispensing request from the first cash-dispensing requesting unit 13 of the first POS terminal apparatus 10, the cash-processing request executing unit 24 outputs a first cash-dispensing execution request for the first change. Further, upon receipt of the second cash-dispensing request from the second cash-dispensing requesting unit 23 of the second POS terminal apparatus 20, the cash-processing request executing unit 24 outputs a second cash-dispensing execution request for the second change.

The cash processing apparatus 30 is connected to the second POS terminal apparatus 20. The cash processing apparatus 30 includes a bill cassette for storing bills and a coin cassette for storing coins. The cash processing apparatus 30 includes a payment accepting unit 31 and a cash dispensing unit 32.

The payment accepting unit 31 accepts first received money fed by a cashier and notifies the first POS terminal apparatus 10 of the amount of the first received money via the cash-processing request executing unit 24. Further, the payment accepting unit 31 accepts second received money fed by a cashier and notifies the second POS terminal apparatus 20 (the cash-processing request executing unit 24) of the amount of the second received money.

Note that the first received money and the second received money are the money cashiers have received from customers for payment amounts for items.

The cash dispensing unit 32 dispenses the first change according to the first cash-dispensing execution request from the second POS terminal apparatus 20. Further, the cash dispensing unit 32 dispenses the second change according to the second cash-dispensing execution request from the second POS terminal apparatus 20.

The following description discusses a payment process using the POS system 50.

The description first discusses a payment process using the first POS terminal apparatus 10.

A customer hands a cashier at the first POS terminal apparatus 10 an item to be purchased.

When the cashier registers the item using the first POS terminal apparatus 10, the first accounting unit 11 of the first POS terminal apparatus 10 calculates a payment amount for the registered item. Then, the cashier receives money (received money) for the payment amount from the customer.

The cashier takes the received money received from the customer to the cash processing apparatus 30. The cashier feeds the received money into the cash processing apparatus 30. The payment accepting unit 31 of the cash processing apparatus 30 counts the received money accepted from the cashier and then notifies the first POS terminal apparatus 10 via the cash-processing request executing unit 24 of the amount of the received money.

The first calculation unit 12 of the first POS terminal apparatus 10 calculates change based on the payment amount and the received money notified of and then provides the cash processing apparatus 30 via the cash-processing request executing unit 24 with a first cash-dispensing execution request for dispensing the change.

The cash processing apparatus 30 dispenses the change according to the first cash-dispensing execution request received from the first POS terminal apparatus 10 via the cash-processing request executing unit 24. The cashier returns the change dispensed from the cash processing apparatus 30 to the customer.

The payment process using the first POS terminal apparatus 10 is completed as described above.

As in the first POS terminal apparatus 10, a payment process is performed in the second POS terminal apparatus 20 by controlling the cash processing apparatus 30 via the cash-processing request executing unit 24.

In this way, the POS system 50 described above includes the first POS terminal apparatus 10, second POS terminal apparatus 20, and cash processing apparatus 30.

The first POS terminal apparatus 10 is connected to the second POS terminal apparatus 20, calculates a first payment amount for a first item that has been registered, calculates first change based on first received money and the first payment amount, and outputs a first cash-dispensing request for the first change.

As with the first POS terminal apparatus 10, the second POS terminal apparatus 20 calculates second payment amount for a second item that has been registered, calculates second change based on second received money and the second payment amount, and issues a second cash-dispensing request for the second change. Further, the cash-processing request executing unit 24 of the second POS terminal apparatus 20 outputs a first cash-dispensing execution request upon receipt of the first cash-dispensing request from the first cash-dispensing requesting unit 13 of the first POS terminal apparatus 10 and outputs a second cash-dispensing execution request upon receipt of the second cash-dispensing request from the second cash-dispensing requesting unit 23 of the second POS terminal apparatus 20.

The cash processing apparatus 30 is connected to the second POS terminal apparatus 20, accepts the first received money fed by a cashier, and notifies the first POS terminal apparatus 10 via the cash-processing request executing unit 24 of the amount of the first received money. Further, the cash processing apparatus 30 accepts the second received money fed by a cashier and notifies the second POS terminal apparatus 20 (the cash-processing request executing unit 24) of the amount of the second received money. The cash processing apparatus 30 dispenses the first change according to the first cash-dispensing execution request from the second POS terminal apparatus 20 and dispenses the second change according to the second cash-dispensing execution request from the second POS terminal apparatus 20.

In this way, the POS system 50 includes one cash processing apparatus 30 shared by the first and second POS terminal apparatuses 10 and 20 for use in payment processes. Accordingly, the POS system 50 does not need to have a different cash processing apparatus 30 for each of the first and second POS terminal apparatuses 10 and 20. This reduces the number of cash processing apparatuses 30, thus reducing investment in equipment.

### [Second Embodiment]

A second embodiment describes a specific example in which a POS system according to the first embodiment is applied to a retail store.

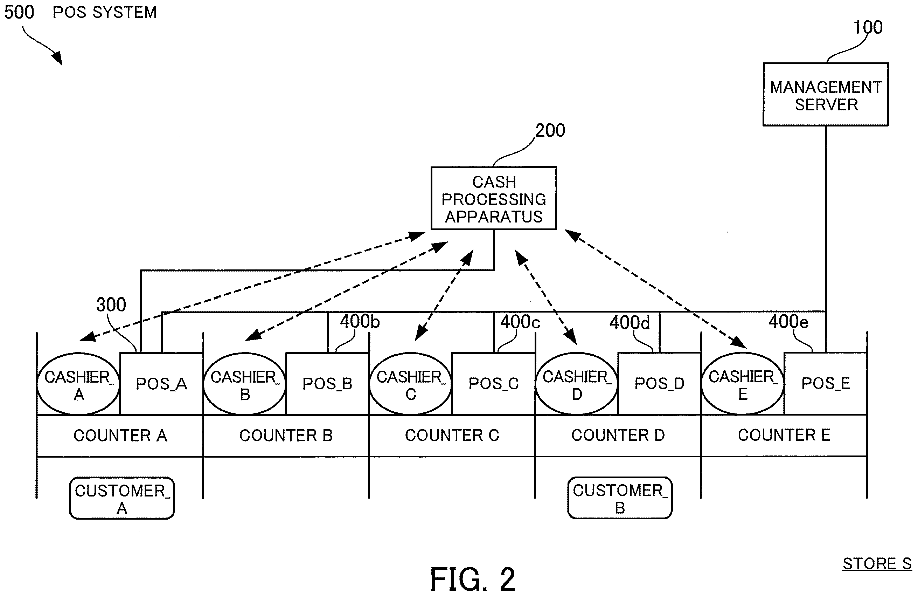

First, a POS system according to a second embodiment will be described below with reference to FIG. 2.

FIG. 2 illustrates an example of a POS system according to a second embodiment.

A POS system 500 is applied to a pharmacy as an example of a retail store. FIG. 2 depicts a plan view of the inside of the store S (pharmacy) to which a POS system 500 is applied. The POS system 500 includes a management server 100, a cash processing apparatus 200, and POS terminal apparatuses 300 and 400b to 400e.

The management server 100 connects to the POS terminal apparatuses 300 and 400b to 400e described below via a network (solid lines in FIG. 2) to manage the POS terminal apparatuses 300 and 400b to 400e. The management server 100 receives sales records from the POS terminal apparatuses 300 and 400b to 400e and provides the POS terminal apparatuses 300 and 400b to 400e with unit prices of items, discount information, and the like. The management server 100 is installed in a backroom such as an administration office inside the store.

The cash processing apparatus 200 includes a built-in bill cassette for storing bills and a built-in coin cassette for storing coins. The cash processing apparatus 200 accepts money fed by a cashier. The cash processing apparatus 200 is connected to the POS terminal apparatus 300 described below and dispenses change according to a request from the POS terminal apparatus 300. The cash processing apparatus 200 is connected to the POS terminal apparatus 300 via the network (solid lines in FIG. 2) and is installed, for example, behind the POS terminal apparatuses 300 and 400b to 400e in the store S.

The POS terminal apparatuses 300 and 400b to 400e are installed at counters where cashiers are positioned. The POS terminal apparatuses 300 and 400b to 400e allow cashiers to register an item and calculate a payment amount for the registered item. The POS terminal apparatuses 300 and 400b to 400e calculate change by subtracting the payment amount from received money each cashier has received from his/her customer for the payment amount. Then, the POS terminal apparatus 300 directly causes, while the POS terminal apparatuses 400b to 400e causes via the POS terminal apparatus 300, the cash processing apparatus 200 to dispense the change. The cashiers positioned at their respective counters move to the cash processing apparatus 200 for feeding the money received from their customers and receiving change and go back to the counters (broken lines in FIG. 2) to return the change to their customers by hand.

The description below may refer to the POS terminal apparatuses 400b to 400e as a POS terminal apparatus 400 where there is no need to differentiate them.

The description below describes a hardware configuration of each element of the POS system 500 described above.

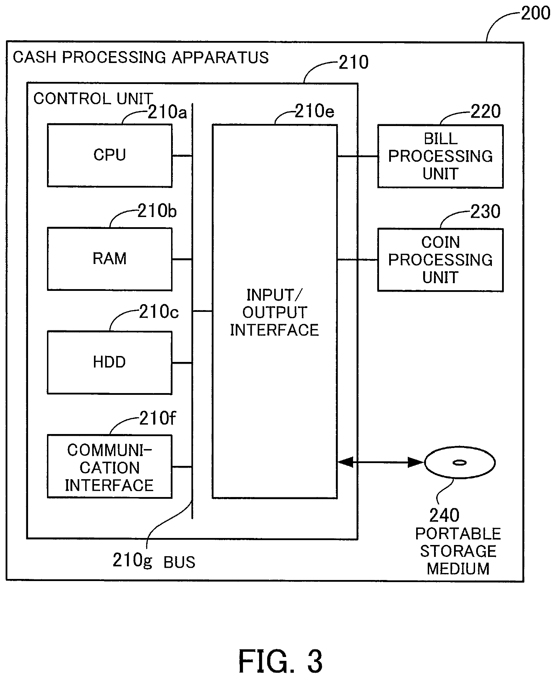

First, a hardware configuration of the cash processing apparatus 200 is described with reference to FIG. 3.

FIG. 3 illustrates an example of a hardware configuration of a cash processing apparatus according to the second embodiment.

The cash processing apparatus 200 includes a control unit 210 and a bill processing unit 220 and a coin processing unit 230 that are individually connected to the control unit 210.

The whole components of the control unit 210 are controlled by a central processing unit (CPU) 210a. To the CPU 210a, a random-access memory (RAM) 210b, a hard disk drive (HDD) 210c, an input/output interface 210e, and a communication interface 210f are connected via a bus 210g.

The RAM 210b temporarily stores at least part of operating system (OS) programs and application programs for implementing a server that the CPU 210a executes. Further, the RAM 210b stores various data to be used in processing by the CPU 210a, data generated from the processing, and the like.

The HDD 210c stores an OS and application programs.

The input/output interface 210e is connected to the bill processing unit 220 and the coin processing unit 230. The input/output interface 210e is connectable to an interface for portable storage media that is able to write data to and read data from a portable storage medium 240. The input/output interface 210e sends signals from the bill processing unit 220 and the coin processing unit 230 to the CPU 210a via the bus 210g. Further, the input/output interface 210e sends control signals from the CPU 210a to the bill processing unit 220 and the coin processing unit 230 via the bus 210g.

The communication interface 210f is connected to the POS terminal apparatus 300 by a connection method, such as Recommended Standard 232 version C (RS-232C) and Universal Serial Bus (USB). The communication interface 210f sends and receives data to and from the POS terminal apparatus 300.

The bill processing unit 220 includes a built-in bill cassette for storing bills. The bill processing unit 220 takes in accepted bills into the bill cassette and dispenses bills stored in the bill cassette out according to a control signal.

The coin processing unit 230 includes a built-in coin cassette for storing coins. The coin processing unit 230 takes in accepted coins into the coin cassette and dispenses coins stored in the coin cassette out according to a control signal.

The hardware configuration as described fulfills processing functions of the second embodiment.

Note that the management server 100 also has at least a hardware configuration similar to that of the control unit 210 of the cash processing apparatus 200.

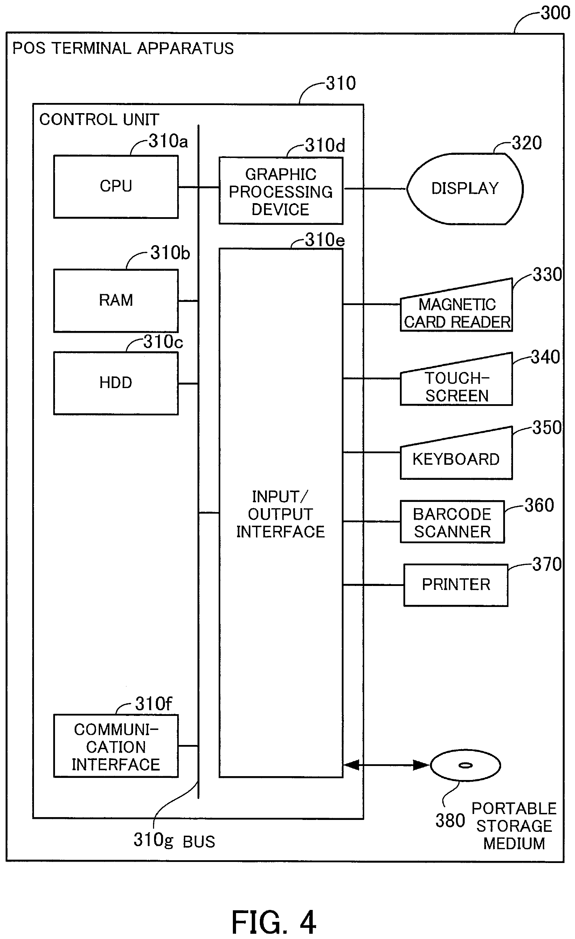

Next, a hardware configuration of the POS terminal apparatus 300 will be described below with reference to FIG. 4.

FIG. 4 illustrates an example of a hardware configuration of a POS terminal apparatus according to the second embodiment.

Although illustration is omitted, each of the POS terminal apparatuses 400b to 400e also has a hardware configuration similar to that of the POS terminal apparatus 300.

The POS terminal apparatus 300 includes a control unit 310 to which various input/output devices are connected.

The whole components of the control unit 310 are controlled by a CPU 310a. To the CPU 310a, a RAM 310b, an HDD 310c, a graphic processing device 310d, an input/output interface 310e, and a communication interface 310f are connected via a bus 310g.

The RAM 310b temporarily stores at least part of OS programs and application programs for implementing a server that the CPU 310a executes. Further, the RAM 310b stores various data used in processing by the CPU 310a, data generated from the processing, and the like.

The HDD 310c stores an OS and application programs.

Connected to the graphic processing device 310d is a display 320. The graphic processing device 310d displays an image on the display 320 in accordance with instructions from the CPU 310a.

There are a magnetic card reader 330, a touchscreen 340, a keyboard 350, a barcode scanner 360, and a printer 370 connected to the input/output interface 310e. The input/output interface 310e is connectable to an interface for portable storage media that is able to write data to and read data from a portable storage medium 380. The input/output interface 310e sends signals from the magnetic card reader 330, touchscreen 340, keyboard 350, barcode scanner 360, printer 370, and interface for portable storage media to the CPU 310a via the bus 310g.

The communication interface 310f is connected to the management server 100 by a connection method, such as Recommended Standard 232 version C (RS-232C) and Universal Serial Bus (USB). The POS terminal apparatus 300 is also connected to the cash processing apparatus 200 and the POS terminal apparatuses 400b to 400e. The communication interface 310f sends data to and receives data from those connected apparatuses. The communication interface 310f adopts the Web Services for point of service (WS-POS) standard, which is a next-generation POS standard that enables control of POS peripherals over a network. The WS-POS enables control of devices connected over a network. For example, the POS terminal apparatus 300 is able to control over a network the cash processing apparatus 200 that is not directly connected in response to instructions from the POS terminal apparatuses 400b to 400e.

The hardware configuration described above fulfills processing functions of the second embodiment.

The control unit 310 may be configured to include a module, such as a field-programmable gate array (FPGA) and a digital signal processor (DSP), and omit the CPU 310a from the configuration. In that case, the control unit 310 includes non-volatile memory (e.g. electrically erasable and programmable read-only memory (EEPROM), flash memory, and memory card of flash memory type) to hold firmware of the module. The non-volatile memory may store firmware written via the portable storage medium 380 or the communication interface 310f. The control unit 310 may update the firmware by overwriting the firmware stored in the non-volatile memory.

Although illustration is omitted, each of the POS terminal apparatuses 400b to 400e also has a hardware configuration similar to that of the POS terminal apparatus 300, but the POS terminal apparatuses 400b to 400e are connected to the management server 100 and POS terminal apparatus 300 by their own communication interfaces 310f.

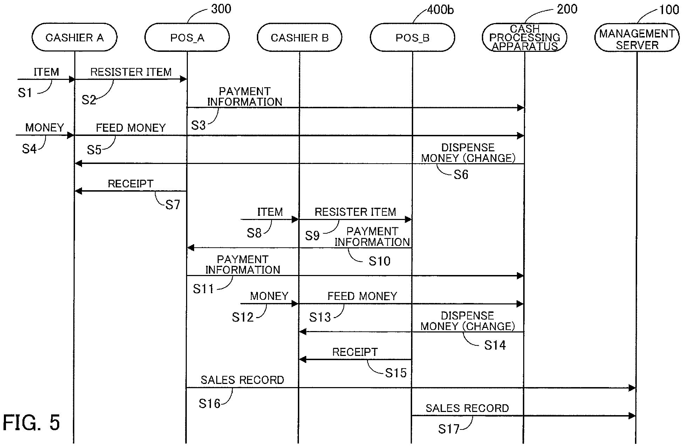

The following description discusses, with reference to FIG. 5 (and FIG. 2), a flow of a payment process performed in the POS system 500 having the configuration described above.

FIG. 5 is a sequence diagram illustrating an example of payment processes performed in the POS system according to the second embodiment.

Assume now that, in FIG. 5, a payment process takes place each at the POS terminal apparatuses 300 and 400b of the POS system 500 illustrated in FIG. 2.

[Step S1] A customer A brings an item to be purchased to a counter A and hands the item to a cashier A.

[Step S2] The cashier A, for example, reads a barcode on the item to be purchased with the barcode scanner 360 of the POS terminal apparatus 300 to register the item.

[Step S3] The POS terminal apparatus 300 calculates a payment amount for the registered item. Then, the cashier A tells the calculated payment amount for the item to the customer A. The POS terminal apparatus 300 sends the payment information of the calculated payment amount to the cash processing apparatus 200. This causes the cash processing apparatus 200 to operate exclusively for the POS terminal apparatus 300.

[Step S4] The customer A hands the cashier A money for the payment amount that the customer A has been told.

[Step S5] The cashier A takes the money (received money) received from the customer A to the cash processing apparatus 200. The cashier A feeds the received money into the cash processing apparatus 200.

The cash processing apparatus 200 notifies the POS terminal apparatus 300 of the amount of the received money.

[Step S6] The POS terminal apparatus 300 calculates change based on the payment amount and the amount of the received money that the POS terminal apparatus 300 has been notified of by the cash processing apparatus 200. The POS terminal apparatus 300 causes the cash processing apparatus 200 to dispense the change (to the cashier A).

[Step S7] The POS terminal apparatus 300 issues a receipt on which a series of transaction details is printed.

This prompts the POS terminal apparatus 300 to release the connection with the cash processing apparatus 200.

[Step S8] A customer B brings an item to be purchased to a counter B and hands the item to a cashier B.

[Step S9] The cashier B, for example, reads a barcode on the item to be purchased with a barcode scanner 360 of the POS terminal apparatus 400b to register the item.

[Step S10] The POS terminal apparatus 400b calculates a payment amount for the registered item. Then, the cashier B tells the calculated payment amount for the item to the customer B. The POS terminal apparatus 400b sends the payment information of the calculated payment amount to the POS terminal apparatus 300.

[Step S11] The POS terminal apparatus 300 sends the payment information (the payment amount) received from the POS terminal apparatus 400b at Step S10 to the cash processing apparatus 200. This causes the cash processing apparatus 200 to operate exclusively for the POS terminal apparatus 400b via the POS terminal apparatus 300.

[Step S12] The customer B hands the cashier B money for the payment amount that the customer B has been told.

[Step S13] The cashier B takes the money (received money) received from the customer B to the cash processing apparatus 200. The cashier B feeds the received money into the cash processing apparatus 200.

The cash processing apparatus 200 notifies the POS terminal apparatus 400b of the amount of the received money via the POS terminal apparatus 300.

[Step S14] The POS terminal apparatus 400b calculates change based on the payment amount and the amount of the received money that the POS terminal apparatus 400b has been notified of by the cash processing apparatus 200. The POS terminal apparatus 400b causes, via the POS terminal apparatus 300, the cash processing apparatus 200 to dispense the change (to the cashier B).

[Step S15] The POS terminal apparatus 400b issues a receipt on which a series of transaction details is printed.

This prompts the POS terminal apparatus 400b to release the connection with the cash processing apparatus 200 via the POS terminal apparatus 300.

[Step S16] The POS terminal apparatus 300 provides the management server 100 with a sales record of its sales attained up to the present.

[Step S17] The POS terminal apparatus 400b provides the management server 100 with a sales record of its sales attained up to the present.

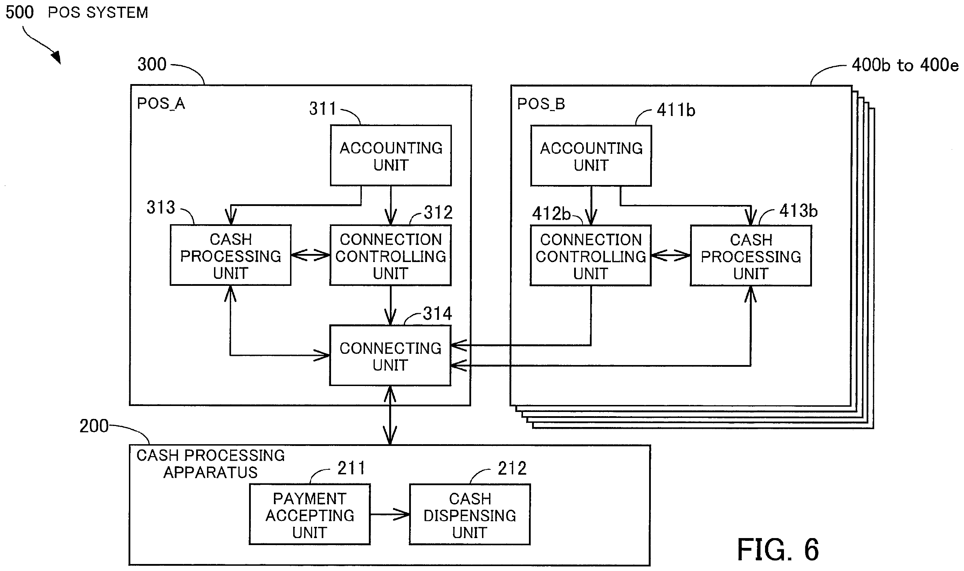

The following description discusses, with reference to FIG. 6, functions that the POS terminal apparatuses 300 and 400b to 400e and the cash processing apparatus 200 have to perform the payment process described above.

FIG. 6 is a functional block diagram that illustrates processing executed by the POS terminal apparatuses and the cash processing apparatus in the POS system according to the second embodiment.

As described above, the cash processing apparatus 200 and the POS terminal apparatuses 400b to 400e are individually connected to the POS terminal apparatus 300 in the POS system 500.

The POS terminal apparatus 300 includes an accounting unit 311, a connection controlling unit 312, a cash processing unit 313, and a connecting unit 314.

The accounting unit 311 performs accounting of items that includes registering an item to be purchased, calculating a payment amount for the registered item, and the like.

The connection controlling unit 312 issues requests for connecting the POS terminal apparatus 300 to the cash processing apparatus 200 and disconnecting the POS terminal apparatus 300 from the cash processing apparatus 200.

The cash processing unit 313 causes the cash processing apparatus 200 to accept received money and dispense change, for example.

The connecting unit 314 handles connection between the POS terminal apparatus 300 and the cash processing apparatus 200 and disconnection of the connection.

As with the POS terminal apparatus 300, the POS terminal apparatuses 400b to 400e include accounting units 411b to 411e, connection controlling units 412b to 412e, and cash processing units 413b to 413e, respectively. These units have functions as the accounting unit 311, connection controlling unit 312, and cash processing unit 313 have, and thus their detailed descriptions are omitted. FIG. 6 illustrates, as an example, a configuration of the POS terminal apparatus 400b among the POS terminal apparatuses 400b to 400e.

The cash processing apparatus 200 includes a payment accepting unit 211 and a cash dispensing unit 212.

The payment accepting unit 211 accepts received money fed into the cash processing apparatus 200 and counts the received money. Further, the payment accepting unit 211 notifies, via the connecting unit 314 of the POS terminal apparatus 300, corresponding one of the cash processing units 313 and 413b to 413e of the POS terminal apparatuses 300 and 400b to 400e of the amount of the received money counted.

The cash dispensing unit 212 dispenses change according to requests from the POS terminal apparatuses 300 and 400b to 400e.

The description below may refer to the POS terminal apparatuses 400b to 400e as a POS terminal apparatus 400 where there is no need to differentiate them. Similarly, the accounting units 411b to 411e, connection controlling units 412b to 412e, and cash processing units 413b to 413e may be referred to as an accounting unit 411, connection controlling unit 412, and cash processing unit 413.

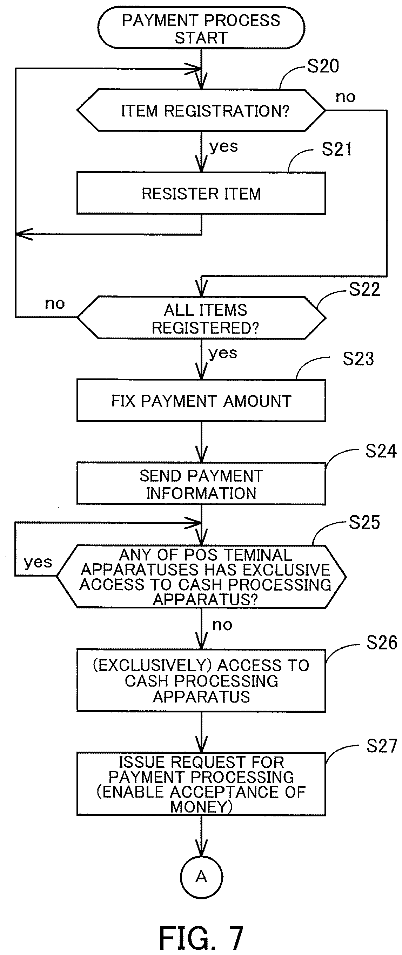

Next, the following description discusses, with reference to FIGS. 7 to 10, a payment process performed by the POS terminal apparatuses 300 and 400b to 400e having the functions described above.

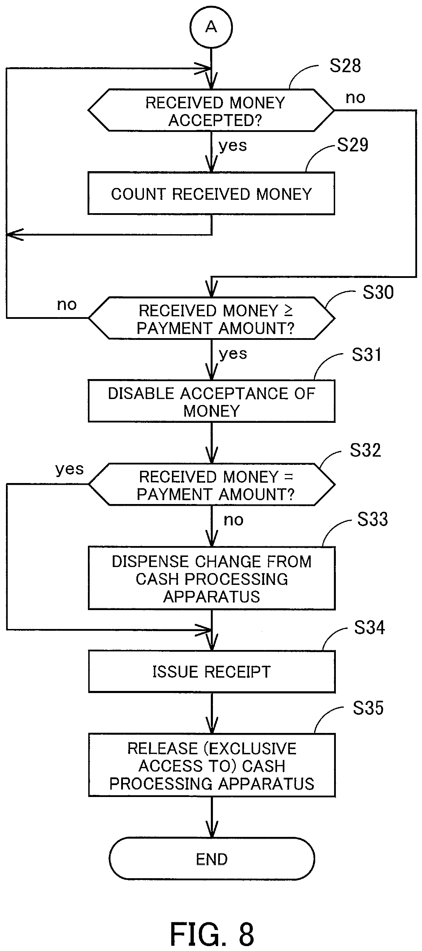

FIGS. 7 and 8 illustrate a flowchart of a payment process performed by the POS terminal apparatuses according to the second embodiment.

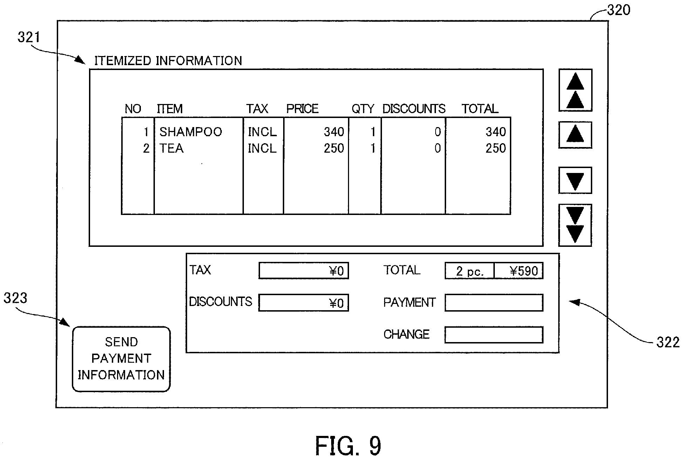

FIG. 9 illustrates an example of a display screen at a payment process on the display of the POS terminal apparatus according to the second embodiment.

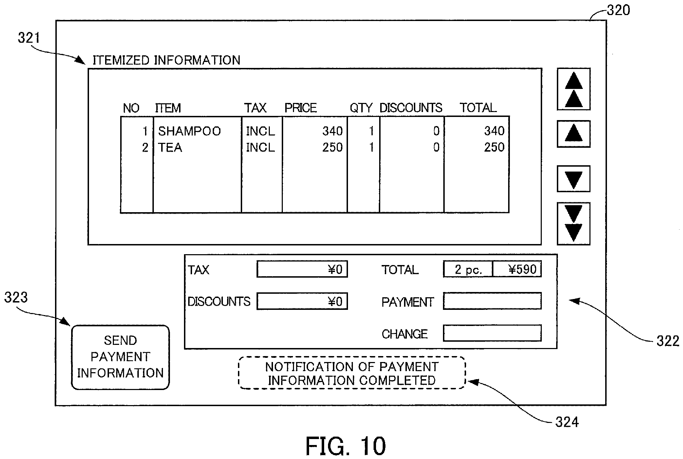

FIG. 10 illustrates an example of a display screen subsequent to payment information transmission on the display of the POS terminal apparatus according to the second embodiment.

[Step S20] The accounting unit 311, 411 of the POS terminal apparatus 300, 400 waits for item registration. If a barcode (identification information) on an item is read by a barcode scanner 360 of the POS terminal apparatus 300, 400, the procedure proceeds to Step S21.

If no item registration occurs, the procedure proceeds to Step S22.

There may be a different method for reading identification information of items, other than scanning a barcode by a barcode scanner 360, such as inputting identification information by using a keyboard 350.

[Step S21] The accounting unit 311, 411 of the POS terminal apparatus 300, 400 registers the item whose identification information has been read at Step S20.

[Step S22] If the POS terminal apparatus 300, 400 finishes registering all the items to be purchased, the procedure proceeds to Step S23. If all the items to be purchased have not been registered yet, the procedure proceeds again to Step S20.

Upon completion of registering all the items, the cashier touches a button for ending item registration indicated on the touchscreen 340 of the POS terminal apparatus 300, 400 (not illustrated) so that the POS terminal apparatus 300, 400 recognizes that all the items are registered.

[Step S23] The accounting unit 311, 411 of the POS terminal apparatus 300, 400 multiplies the quantity of each item registered at Step S22 by their respective unit prices to fix the payment amount. A discounting service or the like would be reflected, if any, in the payment amount.

[Step S24] When the payment amount is fixed at Step S23, the connection controlling unit 312, 412 of the POS terminal apparatus 300, 400 sends payment information about the payment amount to the connecting unit 314 of the POS terminal apparatus 300.

For example, the display 320 illustrated in FIG. 9 includes an area 321 for indicating records of registered items, an area 322 for indicating payment amount, and a button 323 to press to "send payment information". When the payment amount is fixed, the cashier presses the button 323 to cause the connection controlling unit 312, 412 of the POS terminal apparatus 300, 400 to send the payment information about the payment amount to the connecting unit 314 of the POS terminal apparatus 300.

When the connecting unit 314 of the POS terminal apparatus 300 receives the payment information, a message that notification of payment information is complete appears in a region 324 for displaying "notification of payment information completed" on the display 320 of the POS terminal apparatus 300, 400 as illustrated in FIG. 10.

The connecting unit 314 of the POS terminal apparatus 300 sends the payment information to the cash processing apparatus 200 and waits for a response from the cash processing apparatus 200. The connecting unit 314 of the POS terminal apparatus 300 determines whether any of the POS terminal apparatuses 300 and 400 has exclusive access to the cash processing apparatus 200, based on a response from the cash processing apparatus 200.

[Step S25] The connection controlling unit 312, 412 of the POS terminal apparatus 300, 400 determines whether any of the POS terminal apparatuses 300 and 400 has exclusive access to the cash processing apparatus 200, based on a response from the connecting unit 314 of the POS terminal apparatus 300.

If any of the POS terminal apparatuses 300 and 400 has exclusive access to the cash processing apparatus 200, the next procedure is to wait until the cash processing apparatus 200 is released. Once the cash processing apparatus 200 is released, the procedure proceeds to Step S26.

[Step S26] The connection controlling unit 312, 412 of the POS terminal apparatus 300, 400 gains exclusive access to the cash processing apparatus 200 via the connecting unit 314 of the POS terminal apparatus 300.

[Step S27] The connection controlling unit 312, 412 of the POS terminal apparatus 300, 400 issues a request for payment processing to the cash processing apparatus 200 via the connecting unit 314 of the POS terminal apparatus 300. This enables the cash processing apparatus 200 to accept money.

[Step S28] If the cash processing unit 313, 413 of the POS terminal apparatus 300, 400 is notified by the payment accepting unit 211 of the cash processing apparatus 200 that received money has been accepted, the procedure proceeds to Step S29. If it is notified that received money has not been accepted, the procedure proceeds to Step S30.

That is, upon receipt of money (received money) fed by a cashier who has received the money from a customer, the cash processing apparatus 200 notifies the cash processing unit 313, 413 of the POS terminal apparatus 300, 400 via the connecting unit 314 of the POS terminal apparatus 300 of the receipt of money. The cash processing unit 313, 413 of the POS terminal apparatus 300, 400 waits for a notification of receipt of the received money from the cash processing apparatus 200.

[Step S29] The cash processing unit 313, 413 of the POS terminal apparatus 300, 400 causes the cash processing apparatus 200 to count the received money.

The cash processing apparatus 200 notifies the cash processing unit 313, 413 of the POS terminal apparatus 300, 400 via the connecting unit 314 of the POS terminal apparatus 300 of the amount of the received money counted.

[Step S30] The cash processing unit 313, 413 of the POS terminal apparatus 300, 400 determines whether the received money counted at Step S29 is equal to or exceeds the payment amount.

If the received money is equal to or exceeds the payment amount, the procedure proceeds to Step S31. If the received money is less than the payment amount, the procedure proceeds to Step S28.

[Step S31] The connection controlling unit 312, 412 of the POS terminal apparatus 300, 400 disables, via the connecting unit 314 of the POS terminal apparatus 300, the cash processing apparatus 200 from accepting money. That is, the cash processing apparatus 200 stops accepting money.

[Step S32] The cash processing unit 313, 413 of the POS terminal apparatus 300, 400 determines whether the received money counted at Step S29 is equal to the payment amount.

If the received money is equal to the payment amount, the procedure proceeds to Step S34. Otherwise the procedure proceeds to Step S33.

[Step S33] The cash processing unit 313, 413 of the POS terminal apparatus 300, 400 calculates change by subtracting the payment amount from the received money. The cash processing unit 313, 413 of the POS terminal apparatus 300, 400 causes, via the connecting unit 314 of the POS terminal apparatus 300, the cash dispensing unit 212 of the cash processing apparatus 200 to dispense the change.

[Step S34] The cash processing unit 313, 413 of the POS terminal apparatus 300, 400 causes its printer 370 to issue a receipt on which transaction details, such as a payment amount and received money (as well as change if applicable), are printed.

[Step S35] The connection controlling unit 312, 412 of the POS terminal apparatus 300, 400 releases, via the connecting unit 314 of the POS terminal apparatus 300, the cash processing apparatus 200.

As described above, the POS system 500 performs a payment process.

In this way, the POS system 500 includes the POS terminal apparatus 300, the POS terminal apparatuses 400b to 400e individually connected to the POS terminal apparatus 300, and one cash processing apparatus 200 connected to the POS terminal apparatus 300.

The POS terminal apparatuses 400b to 400e share the one cash processing apparatus 200 and cause the cash processing apparatus 200 through the POS terminal apparatus 300 to accept received money and dispense change.

In a pharmacy or the like, as an example of a retailer, the number of medicines (items) a customer purchases is small and it is rare to see a large number of customers come to the store at the same time. Thus, reducing the number of cash processing apparatuses 200 and sharing the one cash processing apparatus 200 among the POS terminal apparatuses 300 and 400b to 400e does not hinder payment operations.

Therefore, one cash processing apparatus 200 may be allotted to the POS terminal apparatuses 300 and 400b to 400e, to be shared for payment processing in the POS system 500. That is, there is no need to have a different cash processing apparatus 200 for each of the POS terminal apparatuses 300 and 400b to 400e in the POS system 500, and thus it is possible to prevent an increase in the number of cash processing apparatuses 200 and reduce investment in equipment.

### [Third Embodiment]

A third embodiment discusses a POS system in which an application for controlling a cash processing apparatus is adopted in a POS terminal apparatus connected to the cash processing apparatus, for example.

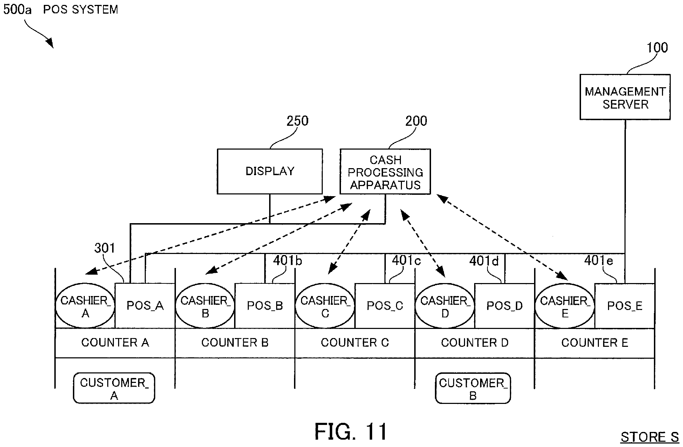

First, a POS system according to a third embodiment will be described below with reference to FIG. 11.

FIG. 11 illustrates an example of a POS system according to a third embodiment.

As with the POS system 500 illustrated in FIG. 2, a POS system 500a includes a management server 100, a cash processing apparatus 200, and POS terminal apparatuses 301 and 401b to 401e. Further, as in the POS system 500, the POS terminal apparatuses 301 and 401b to 401e are individually connected to the management server 100, and the POS terminal apparatuses 401b to 401e are individually connected to the POS terminal apparatus 301.

By contrast, the POS system 500a additionally includes a touchscreen display 250 for a cash processing apparatus. This display 250 is connected to the POS terminal apparatus 301.

The POS terminal apparatuses 301 and 401b to 401e of the POS system 500a have a hardware configuration similar to those of the POS terminal apparatuses 300 and 400b to 400e of the POS system 500 (see FIG. 4), and thus their detailed descriptions are omitted.

However, the display 250 for a cash processing apparatus is connected to a communication interface 310f of the POS terminal apparatus 301 as is the cash processing apparatus 200.

The POS terminal apparatuses 301 and 401b to 401e of the third embodiment do not use WS-POS, and therefore they may be configured without WS-POS.

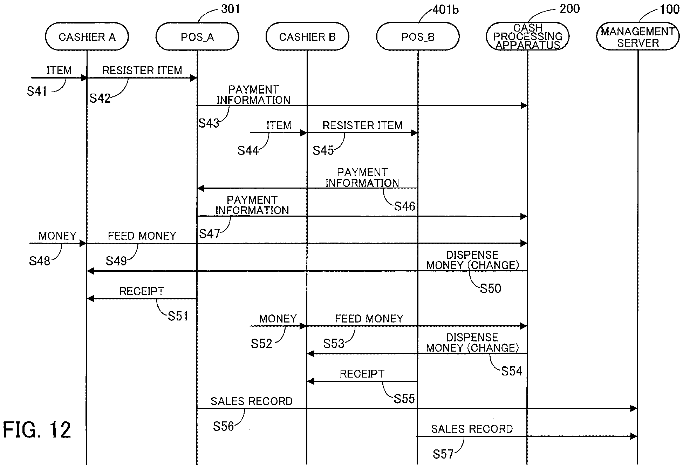

The description below will discuss, with reference to FIG. 12 (and FIG. 11), flows of payment processes performed in the POS system 500a having the configuration described above.

FIG. 12 is a sequence diagram illustrating an example of payment processes performed in the POS system according to the third embodiment.

Assume now that, in FIG. 12, payment processes take place at the POS terminal apparatuses 301 and 401b of the POS system 500a illustrated in FIG. 11.

[Step S41] A customer A brings an item to be purchased to a counter A and hands the item to a cashier A.

[Step S42] The cashier A, for example, reads a barcode on the item to be purchased with a barcode scanner 360 of the POS terminal apparatus 301 to register the item.

[Step S43] The POS terminal apparatus 301 calculates a payment amount for the registered item. The cashier A then tells the payment amount for the item to the customer A. The POS terminal apparatus 301 sends payment information of the payment amount to the cash processing apparatus 200 and holds the payment information.

The POS terminal apparatus 301 displays the payment information on the display 250 for the cash processing apparatus.

[Step S44] A customer B brings an item to be purchased to a counter B and hands the item to a cashier B.

[Step S45] The cashier B, for example, reads a barcode on the item to be purchased with a barcode scanner 360 of the POS terminal apparatus 401b to register the item.

[Step S46] The POS terminal apparatus 401b calculates a payment amount for the registered item. The cashier B then tells the payment amount to the customer B. The POS terminal apparatus 401b sends payment information of the payment amount to the POS terminal apparatus 301.

[Step S47] The POS terminal apparatus 301 sends the payment information (the payment amount) received from the POS terminal apparatus 401b at Step S46 to the cash processing apparatus 200 and holds the payment information.

The POS terminal apparatus 301 displays the payment information (along with the payment information at Step S43) on the display 250 for the cash processing apparatus.

[Step S48] The customer A hands the cashier A money for the payment amount that the customer A has been told.

[Step S49] The cashier A takes the money (received money) received from the customer A to the cash processing apparatus 200. The cashier A specifies the payment information indicated on the display 250 for the cash processing apparatus to feed the received money corresponding to the specified payment information into the cash processing apparatus 200.

The cash processing apparatus 200 notifies the POS terminal apparatus 301 of the amount of the received money fed.

[Step S50] The POS terminal apparatus 301 calculates change based on the payment amount and the amount of the received money that the POS terminal apparatus 301 has been notified of by the cash processing apparatus 200. The POS terminal apparatus 301 causes the cash processing apparatus 200 to dispense the change (to the cashier A).

[Step S51] The POS terminal apparatus 301 issues a receipt on which a series of transaction details is printed.

[Step S52] The customer B hands the cashier B money for the payment amount that the customer B has been told.

[Step S53] The cashier B takes the money (received money) received from the customer B to the cash processing apparatus 200. The cashier B specifies the payment information indicated on the display 250 for the cash processing apparatus to feed the received money corresponding to the specified payment information into the cash processing apparatus 200.

The cash processing apparatus 200 notifies the POS terminal apparatus 301 of the amount of the received money fed.

[Step S54] The POS terminal apparatus 301 calculates change based on the payment amount and the amount of the received money that the POS terminal apparatus 301 has been notified of by the cash processing apparatus 200. The POS terminal apparatus 301 causes the cash processing apparatus 200 to dispense the change (to the cashier B).

The POS terminal apparatus 301 provides the POS terminal apparatus 401b with a series of transaction details.

[Step S55] The POS terminal apparatus 401b issues a receipt on which the series of transaction details is printed.

[Step S56] The POS terminal apparatus 301 provides the management server 100 with a sales record of its sales attained up to the present.

[Step S57] The POS terminal apparatus 401b provides the management server 100 with a sales record of its sales attained up to the present.

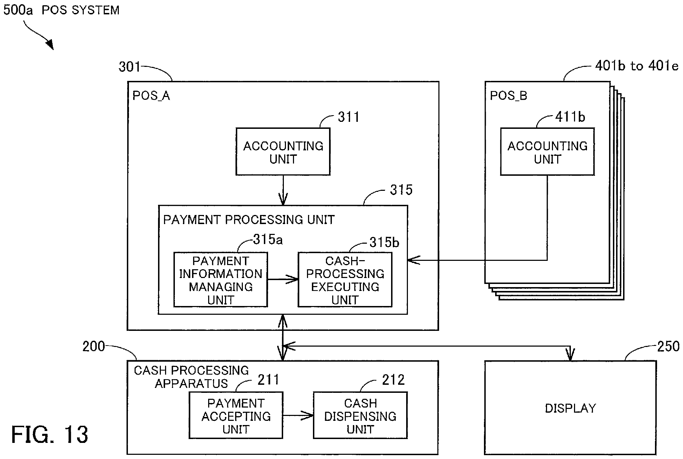

The following description discusses, with reference to FIG. 13, functions that the POS terminal apparatuses 301 and 401b to 401e and the cash processing apparatus 200 have to perform the payment process described above.

FIG. 13 is a functional block diagram that illustrates processing executed by the POS terminal apparatuses and the cash processing apparatus in the POS system according to the third embodiment.

As described above, the cash processing apparatus 200, the POS terminal apparatuses 401b to 401e, and the display 250 are individually connected to the POS terminal apparatus 301 in the POS system 500a.

The POS terminal apparatus 301 includes an accounting unit 311 and a payment processing unit 315.

The accounting unit 311 performs accounting of items that includes registering an item to be purchased, calculating a payment amount for the registered item, and the like as in the second embodiment.

The payment processing unit 315 further includes a payment information managing unit 315a and a cash-processing executing unit 315b.

The payment information managing unit 315a holds payment information received from the POS terminal apparatuses 301 and 401b to 401e and manages the payment information. The payment information managing unit 315a displays the payment information in order of receipt on the display 250. Further, the payment information managing unit 315a accepts specification of payment information indicated on the display 250.

The cash-processing executing unit 315b causes, based on the payment information specified, the cash processing apparatus 200 to execute processing that includes accepting received money, counting the received money, dispensing change, and the like.

The POS terminal apparatuses 401b to 401e include their respective accounting units 411b to 411e that have a function similar to that of the POS terminal apparatus 301.

The cash processing apparatus 200 includes a payment accepting unit 211 and a cash dispensing unit 212 as in the second embodiment.

The description below may refer to the POS terminal apparatuses 401b to 401e as a POS terminal apparatus 401 where there is no need to differentiate them. Similarly, the accounting units 411b to 411e may be referred to as an accounting unit 411.

The following description discusses a payment process performed by the POS terminal apparatuses 301 and 401b to 401e having the functions described above.

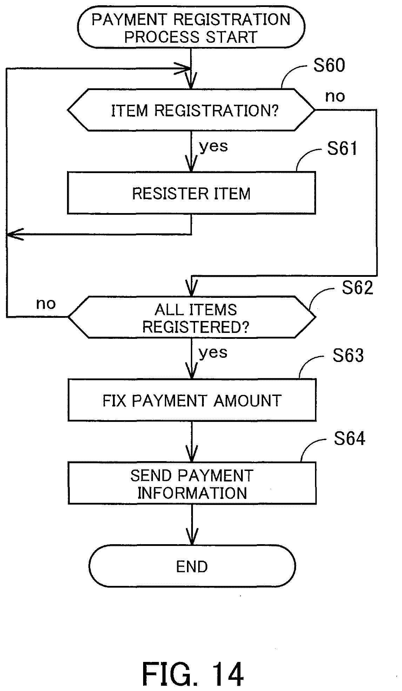

First, a payment registration process of a payment process performed by the POS terminal apparatuses 301 and 401b to 401e will now be described with reference to FIG. 14.

FIG. 14 is a flowchart of a payment registration process performed by a POS terminal apparatus according to the third embodiment.

[Step S60] The accounting unit 311, 411 of the POS terminal apparatus 301, 401 waits for an item registration. When a barcode (identification information) on an item is read by a barcode scanner 360 of the POS terminal apparatus 301, 401, the procedure proceeds to Step S61.

When no item registration occurs, the procedure proceeds to Step S62.

There may be a different method for reading identification information of items, other than reading a barcode by a barcode scanner 360, such as inputting identification information by using a keyboard 350.

[Step S61] The accounting unit 311, 411 of the POS terminal apparatus 301, 401 registers the item whose identification information has been read at Step S60.

[Step S62] When the POS terminal apparatus 301, 401 finishes registering all the items to be purchased, the procedure proceeds to Step S63. If all the items to be purchased have not been registered yet, the procedure proceeds again to Step S60.

Upon completion of registering all the items, the cashier touches, as in the second embodiment, a button for ending item registration (not illustrated) on a touchscreen 340 of the POS terminal apparatus 301, 401 so that the POS terminal apparatus 301, 401 recognizes that all the items are registered.

[Step S63] The accounting unit 311, 411 of the POS terminal apparatus 301, 401 multiplies the quantity of each item registered at Step S62 by their respective unit prices to fix the payment amount. A discounting service or the like would be reflected, if any, in the payment amount.

[Step S64] When the payment amount is fixed at Step S63, a button 323 to press to "send payment information" appears on displays 320 of the POS terminal apparatus 301, 401 as illustrated in FIG. 9, as in the second embodiment. Then, the cashier presses the button 323 such that the accounting unit 311, 411 of the POS terminal apparatus 301, 401 sends payment information about the payment amount to the payment processing unit 315 of the POS terminal apparatus 301.

When the payment processing unit 315 of the POS terminal apparatus 301 receives the payment information, "notification of payment information completed" appears on the display 320 of the POS terminal apparatus 301, 401 as illustrated in FIG. 10.

The POS terminal apparatus 301, 401 performs a payment registration process as described above.

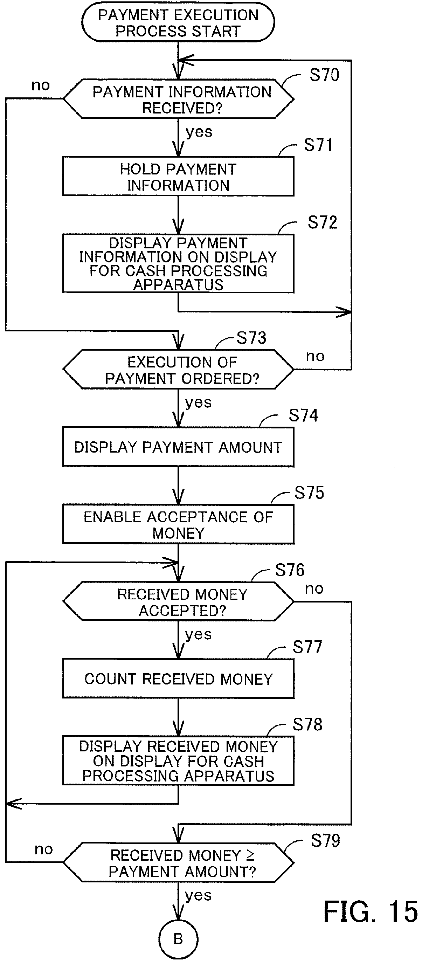

Next, a payment execution process performed by the POS terminal apparatus 301 will now be described with reference to FIGS. 15 to 20.

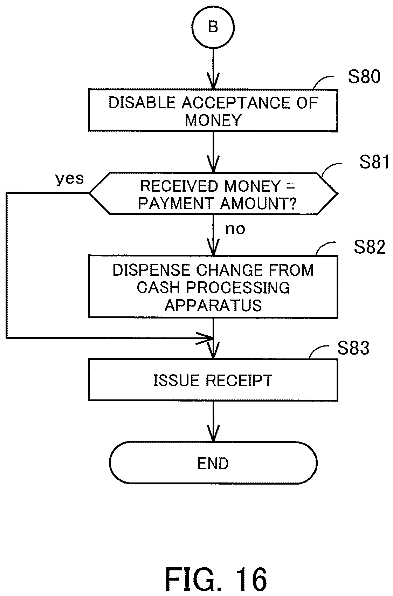

FIGS. 15 and 16 illustrate a flowchart of a payment execution process performed by a POS terminal apparatus according to the third embodiment.

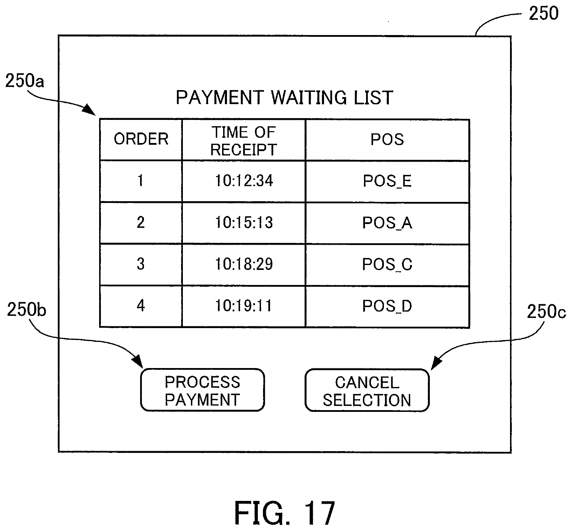

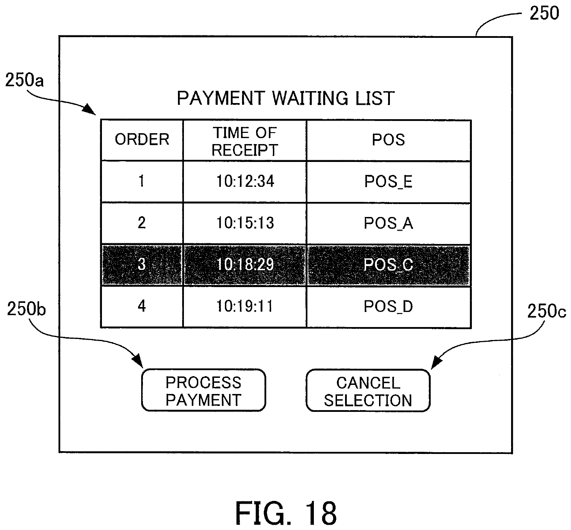

FIGS. 17 and 18 illustrate examples of display screens on the display for the cash processing apparatus according to the third embodiment when a payment is queued.

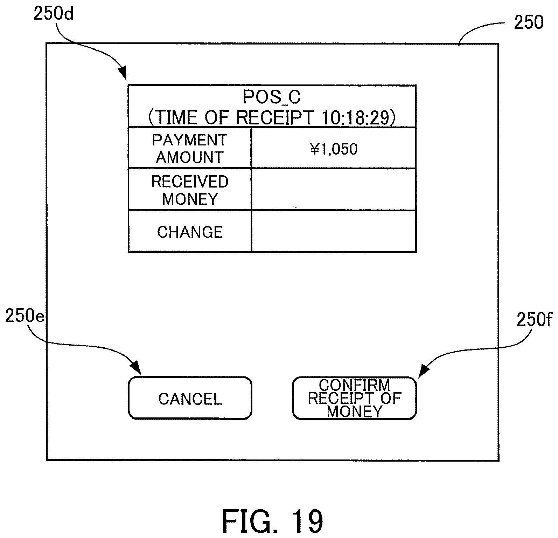

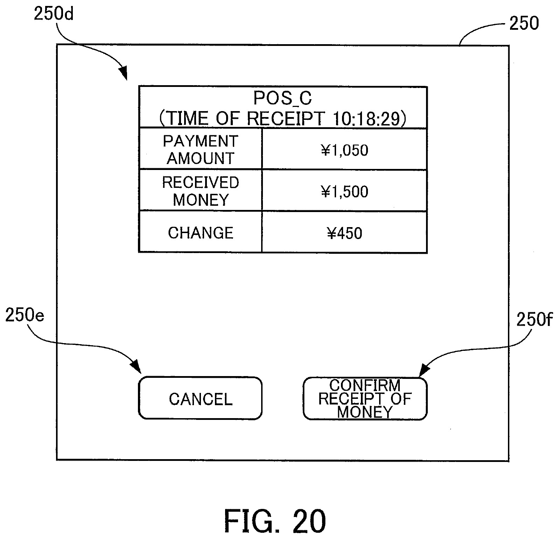

FIGS. 19 and 20 illustrate examples of display screens on the display for the cash processing apparatus according to the third embodiment when a payment is made.

The payment processing unit 315 of the POS terminal apparatus 301 performs the following process upon receipt of payment information from the accounting unit 311, 411 of a POS terminal apparatus 301, 401.

[Step S70] The payment information managing unit 315a of the POS terminal apparatus 301 waits for payment information from the accounting unit 311, 411 of the POS terminal apparatus 301, 401.

If the payment information managing unit 315a of the POS terminal apparatus 301 receives payment information from any of the accounting units 311 and 411 of the POS terminal apparatuses 301 and 401, the procedure proceeds to Step S71, otherwise the procedure proceeds to Step S73.

[Step S71] The payment information managing unit 315a of the POS terminal apparatus 301 holds the payment information received at Step S70.

[Step S72] The payment information managing unit 315a of the POS terminal apparatus 301 displays the payment information held at Step S71 on the display 250 for the cash processing apparatus.

For example, the display 250 includes an area 250a for indicating a list of payment information (i.e., time of receipt and name of a source POS terminal apparatus 301 or 401) held in order of receipt as illustrated in FIG. 17. The display 250 further includes a button 250b for processing a payment according to payment information selected from the list and a button 250c for cancelling selection of payment information. Here, it is apparent that "POS_E(POS terminal apparatus 401e)", "POS_A(POS terminal apparatus 301)", "POS_C(POS terminal apparatus 401c)", and "POS_D(POS terminal apparatus 401d)" are listed in this order on the display 250.

[Step S73] The cash-processing executing unit 315b of the POS terminal apparatus 301 waits for a selection of payment information indicated on the display 250.

If the cash-processing executing unit 315b of the POS terminal apparatus 301 receives a selection of payment information indicated on the display 250, the procedure proceeds to Step S74. If no information is selected, the procedure proceeds again to Step S70.

To process a payment associated with "POS_C(POS terminal apparatus 401c)", a cashier C touches "POS_C" indicated on the display 250 illustrated in FIG. 17. Then, the color in the area of "POS_C" becomes inverted as illustrated in FIG. 18. When the cashier C touches the button 250b to "process payment", the procedure proceeds to Step S74.

[Step S74] The cash-processing executing unit 315b of the POS terminal apparatus 301 displays on the display 250 the payment amount associated with the payment information selected at Step S73.

For example, the display screen on the display 250 at this moment includes an area 250d for indicating "payment amount", "received money", and "change" associated with the selected payment information, a button 250e for cancelling the payment process, and a button 250f for confirming receipt of money as illustrated in FIG. 19.

In response to the selection of "POS_C" (FIG. 18) at Step S73, the cash-processing executing unit 315b of the POS terminal apparatus 301 displays the payment amount associated with "POS_C", i.e. "¥1,050", on the display 250.

[Step S75] The cash-processing executing unit 315b of the POS terminal apparatus 301 enables the cash processing apparatus 200 to accept money.

[Step S76] If the cash-processing executing unit 315b of the POS terminal apparatus 301 is notified by the payment accepting unit 211 of the cash processing apparatus 200 that received money has been accepted, the procedure proceeds to Step S77. If the cash-processing executing unit 315b is notified that received money has not been accepted, the procedure proceeds to Step S79.

That is, upon receipt of money (received money) fed by a cashier who has received the money from a customer, the cash processing apparatus 200 notifies the cash-processing executing unit 315b of the POS terminal apparatus 301 of the receipt of money. The cash-processing executing unit 315b of the POS terminal apparatus 301 waits for a notification of receipt of the received money from the cash processing apparatus 200.

Upon completion (confirmation) of feeding the received money, the cashier C touches the button 250f to "confirm receipt of money" that is illustrated in FIG. 19. Then the procedure proceeds to Step S77.

[Step S77] The cash-processing executing unit 315b of the POS terminal apparatus 301 causes the cash processing apparatus 200 to count the received money.

The cash processing apparatus 200 notifies the cash-processing executing unit 315b of the POS terminal apparatus 301 of the amount of the received money counted.

[Step S78] The cash-processing executing unit 315b of the POS terminal apparatus 301 displays the amount of the received money counted at Step S77 on the display 250 for the cash processing apparatus.

For example, the amount of the received money accepted at that point is indicated in the area 250d for indicating "payment amount", "received money", and "change" in FIG. 20.

[Step S79] The cash-processing executing unit 315b of the POS terminal apparatus 301 determines whether the received money counted at Step S77 is equal to or exceeds the payment amount.

If the received money is equal to or exceeds the payment amount, the procedure proceeds to Step S80. If the received money is less than the payment amount, the procedure proceeds again to Step S76.

[Step S80] The cash-processing executing unit 315b of the POS terminal apparatus 301 disables the cash processing apparatus 200 from accepting money. That is, the cash processing apparatus 200 stops accepting money.

[Step S81] The cash-processing executing unit 315b of the POS terminal apparatus 301 determines whether the received money counted at Step S77 is equal to the payment amount.

If the received money is equal to the payment amount, the procedure proceeds to Step S83. Otherwise the procedure proceeds to Step S82.

[Step S82] The cash-processing executing unit 315b of the POS terminal apparatus 301 calculates change by subtracting the payment amount from the received money. The cash-processing executing unit 315b of the POS terminal apparatus 301 causes the cash dispensing unit 212 of the cash processing apparatus 200 to dispense the change.

Here, the cash-processing executing unit 315b of the POS terminal apparatus 301 displays the amount of the change in the area 250d on the display 250 for the cash processing apparatus as illustrated in FIG. 20.

[Step S83] The cash-processing executing unit 315b of the POS terminal apparatus 301 causes printer 370 of the POS terminal apparatus 301, 401 to issue a receipt on which transaction details, such as a payment amount and received money (as well as change if applicable), are printed.

The POS system 500a performs a payment process as described above.

In this way, the POS system 500a includes the POS terminal apparatus 301, the POS terminal apparatuses 401b to 401e individually connected to the POS terminal apparatus 301, and one cash processing apparatus 200 connected to the POS terminal apparatus 301. In addition, the display 250 for the cash processing apparatus is connected the POS terminal apparatus 301.

The POS terminal apparatuses 301 and 401 individually register items to be purchased and calculate payment amounts for their respective items. Then, POS terminal apparatuses 301 and 401 send payment information about the payment amounts to the payment processing unit 315 of the POS terminal apparatus 301. The payment processing unit 315 of the POS terminal apparatus 301 displays the received payment information on the display 250 in order of receipt. When payment information indicated on the display 250 is selected by a cashier, the payment processing unit 315 of the POS terminal apparatus 301 causes the cash processing apparatus 200 to accept money associated with the selected payment information and dispense change.

Therefore, in the POS system 500a, one cash processing apparatus 200 may be allotted to the POS terminal apparatuses 301 and 401 for use in payment processing. Accordingly, the POS system 500a does not need to have a different cash processing apparatus 200 for each of the POS terminal apparatuses 301 and 401. This prevents an increase in the number of cash processing apparatuses 200, thus reducing investment in equipment.

In addition, the POS terminal apparatus 301 manages payment information received from the POS terminal apparatuses 301 and 401 in the POS system 500a, which enables the cash processing apparatus 200 to properly perform payment processes.

### [Fourth Embodiment]

In a fourth embodiment, the description discusses, by way of example, a variation in which a cash processing apparatus according to the second embodiment is connected to a management server.

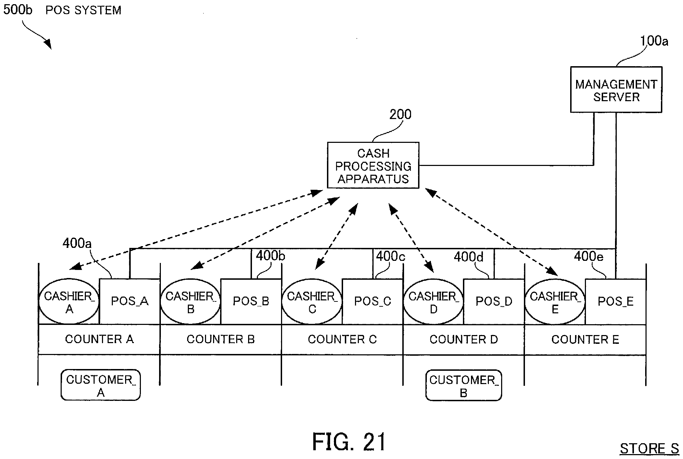

First, a POS system according to a fourth embodiment will be described with reference to FIG. 21.

FIG. 21 illustrates an example of a POS system according to a fourth embodiment.

A POS system 500b includes a management server 100a, a cash processing apparatus 200, and POS terminal apparatuses 400a to 400e.

The POS terminal apparatuses 400a to 400e are connected to the management server 100a. The cash processing apparatus 200 is also connected to the management server 100a.

The management server 100a and the cash processing apparatus 200 have a hardware configuration similar to those of the management server 100 and the cash processing apparatus 200 of the POS system 500 (see FIG. 3).

Further, the POS terminal apparatuses 400a to 400e have a hardware configuration similar to that of the POS terminal apparatus 300 of the POS system 500 (see FIG. 4).

Therefore, detailed descriptions of the hardware of the management server 100a, cash processing apparatus 200, and POS terminal apparatuses 400a to 400e are omitted.

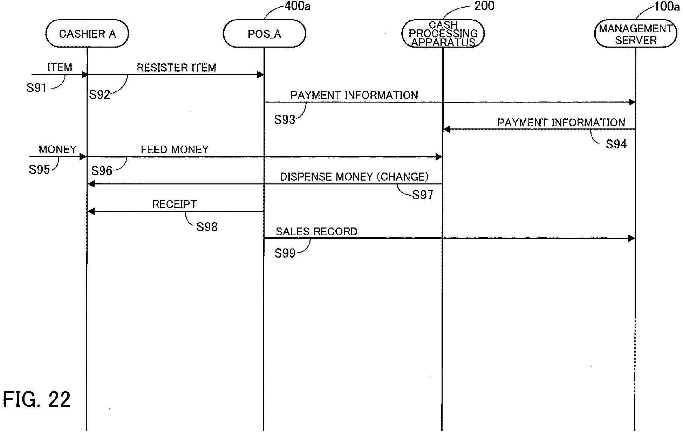

The following description describes, with reference to FIG. 22 (and FIG. 21), a flow of a payment process performed in the POS system 500b having the configuration described above.

FIG. 22 is a sequence diagram illustrating an example of a payment process performed in the POS system according to the fourth embodiment.

Assume that, in FIG. 22, a payment process takes place at the POS terminal apparatus 400a of the POS system 500b illustrated in FIG. 21.

[Step S91] A customer A brings an item to be purchased to a counter A and hands the item to a cashier A.

[Step S92] The cashier A, for example, reads a barcode on the item to be purchased with a barcode scanner 360 of the POS terminal apparatus 400a to register the item.

[Step S93] The POS terminal apparatus 400a calculates a payment amount for the registered item. Then, the cashier A tells the customer A the calculated payment amount for the item. The POS terminal apparatus 400a sends payment information of the payment amount calculated to the management server 100a.

[Step S94] The management server 100a sends the payment information received from the POS terminal apparatus 400a to the cash processing apparatus 200.

[Step S95] The customer A hands the cashier A money for the payment amount that the customer A has been told.

[Step S96] The cashier A takes the money (received money) received from the customer A to the cash processing apparatus 200. The cashier A feeds the received money into the cash processing apparatus 200.

The cash processing apparatus 200 notifies, via the management server 100a, the POS terminal apparatus 400a of the amount of the received money fed.

[Step S97] The POS terminal apparatus 400a calculates change based on the payment amount and the amount of the received money that the POS terminal apparatus 400a has been notified of by the cash processing apparatus 200. The POS terminal apparatus 400a causes, via the management server 100a, the cash processing apparatus 200 to dispense the change (to the cashier A).

[Step S98] The POS terminal apparatus 400a issues a receipt on which a series of transaction details is printed.

[Step S99] The POS terminal apparatus 400a provides the management server 100a with a sales record of its sales attained up to the present.

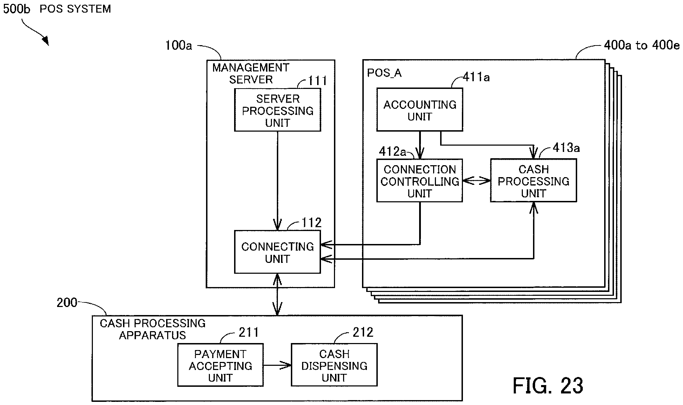

The following description discusses, with reference to FIG. 23, functions that the management server 100a, the POS terminal apparatuses 400a to 400e, and the cash processing apparatus 200 have to perform the payment process described above.

FIG. 23 is a functional block diagram that illustrates processing executed by the management server, the POS terminal apparatuses, and the cash processing apparatus in the POS system according to the fourth embodiment.

As described above, the cash processing apparatus 200 and the POS terminal apparatuses 400a to 400e are individually connected to the management server 100a in the POS system 500b.

The management server 100a includes a server processing unit 111 and a connecting unit 112.

The server processing unit 111 manages information, such as sales records received from the POS terminal apparatuses 400a to 400e, unit prices of items, and discounting services and provides the POS terminal apparatuses 400a to 400e with the information.

The connecting unit 112 has a function similar to that of the connecting unit 314 of the POS terminal apparatus 300 according to the second embodiment. That is, the connecting unit 112 handles connection between the management server 100a and the cash processing apparatus 200 and disconnection of the connection.

As with the POS terminal apparatuses 400b to 400e of the second embodiment, the POS terminal apparatuses 400a to 400e include accounting units 411a to 411e, connection controlling units 412a to 412e, and cash processing units 413a to 413e, respectively.

As in the second embodiment, the cash processing apparatus 200 includes a payment accepting unit 211 and a cash dispensing unit 212.

The management server 100a and the POS terminal apparatuses 400a to 400e having functions described above perform a payment process in accordance with the flowchart of the second embodiment illustrated in FIGS. 7 and 8.

In the flowchart of FIGS. 7 and 8, payment is processed via the connecting unit 314 of the POS terminal apparatus 300, however, payment is processed via the connecting unit 112 of the management server 100a in the present case.

In this way, the POS system 500b includes the management server 100a, the POS terminal apparatuses 400a to 400e individually connected to the management server 100a, and one cash processing apparatus 200 also connected to the management server 100a.

The POS terminal apparatuses 400a to 400e cause, via the management server 100a, the one cash processing apparatus 200 to accept received money and dispense change.

Therefore, one cash processing apparatus 200 may be allotted to the POS terminal apparatuses 400a to 400e, to be shared for payment processing in the POS system 500b. That is, there is no need to have a different cash processing apparatus 200 for each of the POS terminal apparatuses 400a to 400e in the POS system 500b, and thus it is possible to prevent an increase in the number of cash processing apparatuses 200 and reduce investment in equipment.

### [Fifth Embodiment]

In a fifth embodiment, the description discusses, by way of example, a variation in which a cash processing apparatus (and a display) according to the third embodiment is connected to a management server.

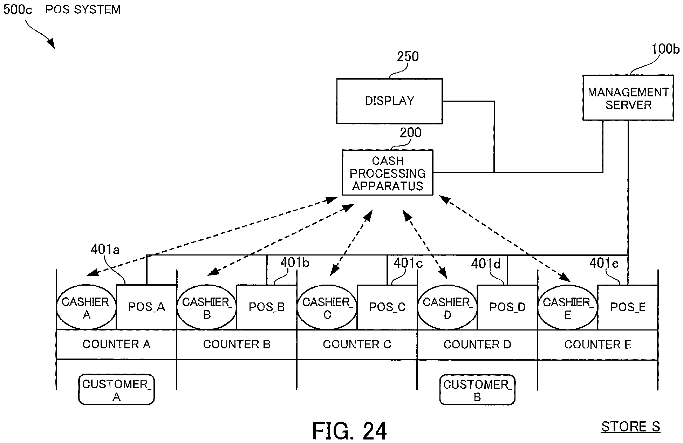

First, a POS system according to a fifth embodiment will be described with reference to FIG. 24.

FIG. 24 illustrates an example of a POS system according to a fifth embodiment.

A POS system 500c includes a management server 100b, a cash processing apparatus 200, a display 250, and POS terminal apparatuses 401a to 401e. Further, the cash processing apparatus 200 and the POS terminal apparatuses 401a to 401e are individually connected to the management server 100b as in the POS system 500b.

By contrast, the POS system 500c additionally includes a touchscreen display 250 for a cash processing apparatus. This display 250 is connected to the management server 100b.

The management server 100b and the cash processing apparatus 200 have a hardware configuration similar to those of the management server 100 and the cash processing apparatus 200 of the POS system 500 (see FIG. 3).

Further, the POS terminal apparatuses 401a to 401e have a hardware configuration similar to that of the POS terminal apparatus 300 of the POS system 500 (see FIG. 4).

Therefore, detailed description of the hardware of the management server 100b, cash processing apparatus 200, and POS terminal apparatuses 401a to 401e are omitted.

However, note that the management server 100b and the POS terminal apparatuses 401a to 401e according to the fifth embodiment do not use WS-POS, and thus they may be configured without WS-POS.

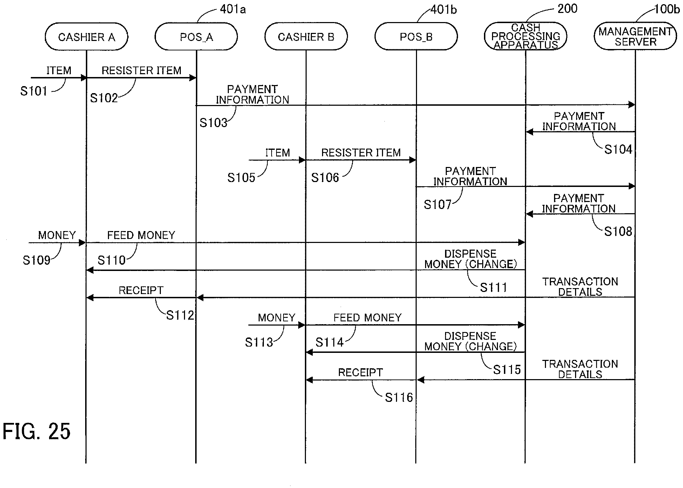

The description below will discuss, with reference to FIG. 25 (and FIG. 24), flows of payment processes performed in the POS system 500c having the configuration described above.

FIG. 25 is a sequence diagram illustrating an example of payment processes performed in the POS system according to the fifth embodiment.

Assume now that, in FIG. 25, payment processes take place at the POS terminal apparatuses 401a and 401b of the POS system 500c illustrated in FIG. 24.

[Step S101] A customer A brings an item to be purchased to a counter A and hands the item to a cashier A.

[Step S102] The cashier A, for example, reads a barcode on the item to be purchased with a barcode scanner 360 of the POS terminal apparatus 401a to register the item.

[Step S103] The POS terminal apparatus 401a calculates a payment amount for the registered item. Then, the cashier A tells the customer A the calculated payment amount for the item. The POS terminal apparatus 401a sends payment information of the payment amount calculated to the management server 100b.

[Step S104] The management server 100b sends the cash processing apparatus 200 the payment information (the payment amount) that the management server 100b has received from the POS terminal apparatus 401a at Step S103 and holds the payment information.

The management server 100b displays the payment information on the display 250 for the cash processing apparatus.

[Step S105] A customer B brings an item to be purchased to a counter B and hands the item to a cashier B.

[Step S106] The cashier B, for example, reads a barcode on the item to be purchased with a barcode scanner 360 of the POS terminal apparatus 401b to register the item.

[Step S107] The POS terminal apparatus 401b calculates a payment amount for the registered item. Then, the cashier B tells the customer B the calculated payment amount for the item. The POS terminal apparatus 401b sends payment information of the payment amount calculated to the management server 100b. The management server 100b holds the payment information received from the POS terminal apparatus 401b.

[Step S108] The management server 100b sends the cash processing apparatus 200 the payment information (the payment amount) received from the POS terminal apparatus 401b at Step S107 and holds the payment information.

The management server 100b displays the payment information (along with the payment information at Step S104) on the display 250 for the cash processing apparatus.

[Step S109] The customer A hands the cashier A money for the payment amount that the customer A has been told.

[Step S110] The cashier A takes the money (received money) received from the customer A to the cash processing apparatus 200. The cashier A selects the payment information indicated on the display 250 for the cash processing apparatus to feed the received money corresponding to the selected payment information into the cash processing apparatus 200.

The cash processing apparatus 200 notifies the management server 100b of the amount of the received money fed.

[Step S111] The management server 100b calculates change based on the payment amount and the amount of the received money that the management server 100b has been notified of by the cash processing apparatus 200. The management server 100b causes the cash processing apparatus 200 to dispense the change (to the cashier A).

[Step S112] The POS terminal apparatus 401a issues a receipt on which a series of transaction details received from the management server 100b is printed.

[Step S113] The customer B hands the cashier B money for the payment amount that the customer B has been told.

[Step S114] The cashier B takes the money (received money) received from the customer B to the cash processing apparatus 200. The cashier B selects the payment information indicated on the display 250 for the cash processing apparatus to feed the received money corresponding to the selected payment information into the cash processing apparatus 200.

The cash processing apparatus 200 notifies the management server 100b of the amount of the received money fed.

[Step S115] The management server 100b calculates change based on the payment amount and the amount of the received money that the management server 100b has been notified of by the cash processing apparatus 200. The management server 100b causes the cash processing apparatus 200 to dispense the change (to the cashier B).

[Step S116] The POS terminal apparatus 401b issues a receipt on which a series of transaction details received from the management server 100b is printed.

The management server 100b manages sales records of the sales attained up to the present.

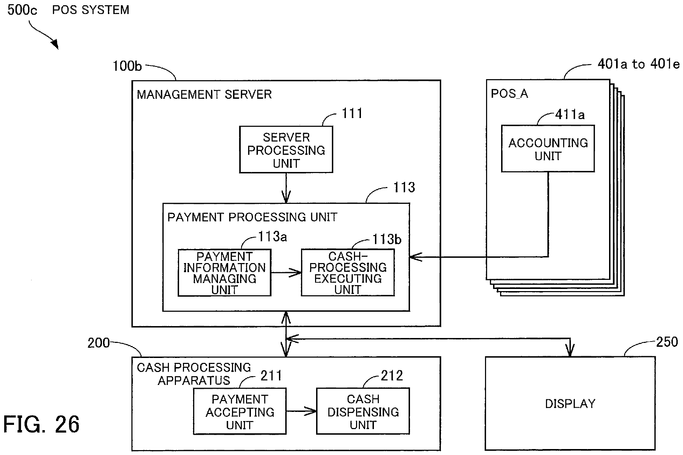

The following description discusses, with reference to FIG. 26, functions that the management server 100b, the POS terminal apparatuses 401a to 401e, and the cash processing apparatus 200 have to perform the payment process described above.

FIG. 26 is a functional block diagram that illustrates processing executed by the management server, the POS terminal apparatuses, and the cash processing apparatus in the POS system according to the fifth embodiment.

As described above, the cash processing apparatus 200, the display 250, and the POS terminal apparatuses 401a to 401e are individually connected to the management server 100b in the POS system 500c.

The management server 100b includes a server processing unit 111 and a payment processing unit 113.

The server processing unit 111 includes the server processing unit 111 that the management server 100a of the fourth embodiment includes.

The payment processing unit 113 further includes a payment information managing unit 113a and a cash-processing executing unit 113b. The payment processing unit 113 includes a function similar to that of the payment processing unit 315 of the POS terminal apparatus 301 of the third embodiment.

As in the third embodiment, the cash processing apparatus 200 includes a payment accepting unit 211 and a cash dispensing unit 212.

The POS terminal apparatuses 401a to 401e including their respective accounting units 411a to 411e, similar to those illustrated in FIG. 23 perform a payment registration process in accordance with the flowchart of the third embodiment illustrated in FIG. 14. Further, the management server 100b having the function described above performs a payment execution process in accordance with the flowchart of the third embodiment illustrated in FIGS. 15 and 16.

That is, the payment processing unit 113 of the management server 100b performs a payment execution process illustrated in the flowchart of FIGS. 15 and 16 in place of the payment processing unit 315 of the POS terminal apparatus 301.

In this way, the POS system 500c includes the management server 100b, the POS terminal apparatuses 401a to 401e individually connected to the management server 100b, and one cash processing apparatus 200 also connected to the management server 100b. In addition, the display 250 is connected to the management server 100b.

The POS terminal apparatuses 401a to 401e causes, via the management server 100b, the one cash processing apparatus 200 to accept received money and dispense change.

Therefore, one cash processing apparatus 200 may be allotted to the POS terminal apparatuses 401a to 401e, to be shared for payment processing in the POS system 500c. That is, there is no need to have a different cash processing apparatus 200 for each of the POS terminal apparatuses 401a to 401e in the POS system 500c, and thus it is possible to prevent an increase in the number of cash processing apparatuses 200 and reduce investment in equipment.

In addition, the management server 100b manages payment information received from the POS terminal apparatuses 401a to 401e in the POS system 500c, which enables the cash processing apparatus 200 to properly perform payment processes.

The processing functions described above may be implemented by a computer. In this case, programs describing details of processing for the functions implemented by a computer are distributed. The processing functions described above are implemented on a computer as the computer executes the programs.

Programs describing details of processing may be stored in computer readable storage media. The computer readable storage media include a magnetic storage device, optical disc, magneto-optical storage medium, semiconductor memory, and the like. The magnetic storage device includes an HDD, flexible disk (FD), magnetic tape (MT), and the like. The optical disc includes a digital versatile disc (DVD), DVD-RAM, compact disc read-only memory (CD-ROM), CD-Recordable/ReWritable (CD-R/RW), and the like. The magneto-optical storage medium includes a magneto-optical disk (MO) and the like. The semiconductor memory includes a flash memory such as Universal Serial Bus (USB) memory.

To distribute the programs, portable storage media, such as DVDs and CD-ROMs, storing the programs are put on sale, for example. Alternatively, the programs may be stored in a server computer to be forwarded via a network to other computers from the server computer.

A computer that executes the programs stores the program recorded in a portable storage medium or forwarded from the server computer into its local storage device. Then, the computer reads the programs from its own storage device and executes processes according to the programs. The computer may read the programs directly from the portable storage medium to execute processes according to the programs. Further, the computer may dynamically receive the programs forwarded from the server computer and execute processes according to the programs.

The whole or a part of processes written in the programs may be replaced by an electronic circuit. At least a part of the processing functions described above may be implemented by an electronic circuit, such as a DSP, application-specific integrated circuit (ASIC), and programmable logic device (PLD).

### Reference Signs List

- 10:: first POS terminal apparatus
- 11:: first accounting unit
- 12:: first calculation unit
- 13:: first cash-dispensing requesting unit
- 20:: second POS terminal apparatus
- 21:: second accounting unit
- 22:: second calculation unit
- 23:: second cash-dispensing requesting unit
- 24:: cash-processing request executing unit
- 30:: cash processing apparatus
- 31:: payment accepting unit
- 32:: cash dispensing unit
- 50:: POS system

## Claims

1. A point of sale, POS, system (500a) comprising:
a management server (100), a first POS terminal apparatus (301), a second POS terminal apparatus (401) connected to the first POS terminal apparatus (301), a cash processing apparatus (200), and a touchscreen display (250) for the cash processing apparatus (200), wherein the first POS terminal apparatus (301) and the second POS terminal apparatus (401) are individually connected to the management server (100);
the first POS terminal apparatus including:
a communication interface (310f), wherein the touchscreen display (250) and the cash processing apparatus (200) are each connected to the communication interface (310f),
a first accounting unit (311) that registers a first item to be purchased, calculates a first payment amount for the first registered item, and sends payment information about the first payment amount to a payment processing unit (315) included in the first POS terminal apparatus, the payment processing unit (315) including a payment information managing unit (315a) and a cash-processing executing unit (315b);
the second POS terminal apparatus (401) including a second accounting unit (411) that registers a second item to be purchased, calculates a second payment amount for the second registered item, and sends payment information about the second payment amount to the payment processing unit (315) of the first POS terminal apparatus (301); and
the cash processing apparatus (200) including a payment accepting unit (211) that accepts received money, counts the received money, and notifies the first POS terminal apparatus (301) of an amount of the received money counted, and a cash dispensing unit (212) that dispenses change according to a request from the first POS terminal apparatus (301);
wherein the payment information managing unit (315a) holds the payment information received from the first POS terminal apparatus (301) and the second POS terminal apparatus (401), manages the payment information, displays the payment information in order of receipt on the touchscreen display (250), and accepts specification of the payment information indicated on the touchscreen display (250);
wherein the cash-processing executing unit (315b) calculates the change based on the one of the first or second payment amount corresponding to the payment information specified and the amount of the received money that the first POS terminal apparatus (301) has been notified of by the cash processing apparatus (200) and causes, based on the payment information specified, the cash processing apparatus (200) to execute processing that includes accepting the received money, counting the received money, and dispensing the change; and
wherein the first POS terminal apparatus (301) and the second POS terminal apparatus (401) each provide the management server (100) with a sales record of their sales.

2. A payment method comprising:
registering, by a first accounting unit (311) of a first POS terminal apparatus (301), a first item to be purchased;
calculating, by the first accounting unit (311), a first payment amount for the first registered item;
sending, by the first accounting unit (311), payment information about the first payment amount to a payment processing unit (315) of the first POS terminal apparatus (301), the payment processing unit (315) including a payment information managing unit (315a) and a cash-processing executing unit (315b);
registering, by a second accounting unit (411) of a second POS terminal apparatus (401) connected to the first POS terminal apparatus (301), a second item to be purchased;
calculating, by the second accounting unit (411), a second payment amount for the second registered item;
sending, by the second accounting unit (411), payment information about the second payment amount to the payment processing unit (315) of the first POS terminal apparatus (301);
holding, by the payment information managing unit (315a), the payment information received from the first POS terminal apparatus (301) and the second POS terminal apparatus (401), managing the payment information, displaying the payment information in order of receipt on a touchscreen display (250) connected to the first POS terminal apparatus (301), and accepting specification of the payment information indicated on the touchscreen display (250);
accepting, by a payment accepting unit (211) of a cash processing apparatus (200) connected to the first POS terminal apparatus (301), received money, counting the received money, and notifying the first POS terminal apparatus (301) of an amount of the received money counted;
calculating, by the cash-processing executing unit (315b), change based on the one of the first or second payment amount corresponding to the payment information specified and the amount of the received money that the first POS terminal apparatus (301) has been notified of by the cash processing apparatus (200); and
dispensing, by a cash dispensing unit (212) of the cash processing apparatus (200), the change according to a request from the first POS terminal apparatus (301);
wherein the first POS terminal apparatus (301) and the second POS terminal apparatus (401) each provide a management server (100) with a sales record of their sales, the first POS terminal apparatus (301) and the second POS terminal apparatus (401) being individually connected to the management server (100).

## Patentansprüche

1. Point of Sale-, POS-, System (500a), umfassend:
einen Verwaltungsserver (100), eine erste POS-Endgeräteeinrichtung (301), eine zweite POS-Endgeräteeinrichtung (401), die mit der ersten POS-Endgeräteeinrichtung (301) verbunden ist, eine Bargeldverarbeitungseinrichtung (200) und eine Berührungsbildschirmanzeige (250) für die Bargeldverarbeitungseinrichtung (200), wobei die erste POS-Endgeräteeinrichtung (301) und die zweite POS-Endgeräteeinrichtung (401) einzeln mit dem Verwaltungsserver (100) verbunden sind;
wobei die erste POS-Endgeräteeinrichtung Folgendes einschließt:
eine Kommunikationsschnittstelle (310f), wobei die Berührungsbildschirmanzeige (250) und die Bargeldverarbeitungseinrichtung (200) jeweils mit der Kommunikationsschnittstelle (310f) verbunden sind,
eine erste Abrechnungseinheit (311), die einen ersten zu kaufenden Artikel registriert, einen ersten Zahlungsbetrag für den ersten registrierten Artikel berechnet und Zahlungsinformationen über den ersten Zahlungsbetrag an eine Zahlungsverarbeitungseinheit (315) sendet, die in der ersten POS-Endgeräteeinrichtung eingeschlossen ist, wobei die Zahlungsverarbeitungseinheit (315) eine Zahlungsinformationsverwaltungseinheit (315a) und eine Bargeldverarbeitungsausführungseinheit (315b) einschließt;
wobei die zweite POS-Endgeräteeinrichtung (401) eine zweite Abrechnungseinheit (411) einschließt, die einen zweiten zu kaufenden Artikel registriert, einen zweiten Zahlungsbetrag für den zweiten registrierten Artikel berechnet und Zahlungsinformationen über den zweiten Zahlungsbetrag an die Zahlungsverarbeitungseinheit (315) der ersten POS-Endgeräteeinrichtung (301) sendet; und
wobei die Bargeldverarbeitungseinrichtung (200) eine Zahlungsannahmeeinheit (211), die empfangenes Geld annimmt, das empfangene Geld zählt und die erste POS-Endgeräteeinrichtung (301) über einen Betrag des gezählten empfangenen Geldes benachrichtigt, und eine Bargeldausgabeeinheit (212) einschließt, die Wechselgeld gemäß einer Anforderung von der ersten POS-Endgeräteeinrichtung (301) ausgibt;
wobei die Zahlungsinformationsverwaltungseinheit (315a) die von der ersten POS-Endgeräteeinrichtung (301) und der zweiten POS-Endgeräteeinrichtung (401) empfangenen Zahlungsinformationen aufbewahrt, die Zahlungsinformationen verwaltet, die Zahlungsinformationen in einer Empfangsreihenfolge auf der Berührungsbildschirmanzeige (250) anzeigt und eine Angabe der auf der Berührungsbildschirmanzeige (250) angegebenen Zahlungsinformationen annimmt;
wobei die Bargeldverarbeitungsausführungseinheit (315b) das Wechselgeld basierend auf dem einen des ersten oder zweiten Zahlungsbetrag, der den angegebenen Zahlungsinformationen entspricht, und dem Betrag des empfangenen Geldes, über den die erste POS-Endgeräteeinrichtung (301) durch die Bargeldverarbeitungseinrichtung (200) benachrichtigt wurde, berechnet und die Bargeldverarbeitungseinrichtung (200) dazu veranlasst, basierend auf den angegebenen Zahlungsinformationen, eine Verarbeitung durchzuführen, die Annehmen des empfangenen Geldes, Zählen des empfangenen Geldes und Ausgeben des Wechselgeldes einschließt; und
wobei die erste POS-Endgeräteeinrichtung (301) und die zweite POS-Endgeräteeinrichtung (401) dem Verwaltungsserver (100) jeweils einen Verkaufsdatensatz ihrer Verkäufe bereitstellen.

2. Bezahlverfahren, umfassend:
Registrieren eines ersten zu kaufenden Artikels durch eine erste Abrechnungseinheit (311) einer ersten POS-Endgeräteeinrichtung (301);
Berechnen eines ersten Zahlungsbetrags für den ersten registrierten Artikel durch die erste Abrechnungseinheit (311);
Senden von Zahlungsinformationen über den ersten Zahlungsbetrag durch die erste Abrechnungseinheit (311) an eine Zahlungsverarbeitungseinheit (315) der ersten POS-Endgeräteeinrichtung (301), wobei die Zahlungsverarbeitungseinheit (315) eine Zahlungsinformationsverwaltungseinheit (315a) und eine Bargeldverarbeitungsausführungseinheit (315b) einschließt;
Registrieren eines zweiten zu kaufenden Artikels durch eine zweite Abrechnungseinheit (411) einer zweiten POS-Endgeräteeinrichtung (401), die mit der ersten POS-Endgeräteeinrichtung (301) verbunden ist;
Berechnen eines zweiten Zahlungsbetrags für den zweiten registrierten Artikel durch die zweite Abrechnungseinheit (411);
Senden von Zahlungsinformationen über den zweiten Zahlungsbetrag durch die zweite Abrechnungseinheit (411) an die Zahlungsverarbeitungseinheit (315) der ersten POS-Endgeräteeinrichtung (301);
Aufbewahren der von der ersten POS-Endgeräteeinrichtung (301) und der zweiten POS-Endgeräteeinrichtung (401) empfangenen Zahlungsinformationen durch die Zahlungsinformationsverwaltungseinheit (315a), Verwalten der Zahlungsinformationen, Anzeigen der Zahlungsinformationen in einer Empfangsreihenfolge auf einer Berührungsbildschirmanzeige (250), die mit der ersten POS-Endgeräteeinrichtung (301) verbunden ist, und
Annehmen einer Angabe der auf der Berührungsbildschirmanzeige (250) angegebenen Zahlungsinformationen;
Annehmen von empfangenem Geld durch eine Zahlungsannahmeeinheit (211) einer Bargeldverarbeitungseinrichtung (200), die mit der ersten POS-Endgeräteeinrichtung (301) verbunden ist, Zählen des empfangenen Geldes und Benachrichtigen der ersten POS-Endgeräteeinrichtung (301) über einen Betrag des gezählten empfangenen Geldes;
Berechnen von Wechselgeld durch die Bargeldverarbeitungsausführungseinheit (315b) basierend auf dem einen des ersten oder zweiten Zahlungsbetrag, der den angegebenen Zahlungsinformationen entspricht, und dem Betrag des empfangenen Geldes, über den die erste POS-Endgeräteeinrichtung (301) durch die Bargeldverarbeitungseinrichtung (200) benachrichtigt wurde; und
Ausgeben des Wechselgeldes durch eine Bargeldausgabeeinheit (212) der Bargeldverarbeitungseinrichtung (200) gemäß einer Anforderung von der ersten POS-Endgeräteeinrichtung (301);
wobei die erste POS-Endgeräteeinrichtung (301) und die zweite POS-Endgeräteeinrichtung (401) einem Verwaltungsserver (100) jeweils einen Verkaufsdatensatz ihrer Verkäufe bereitstellen, wobei die erste POS-Endgeräteeinrichtung (301) und die zweite POS-Endgeräteeinrichtung (401) einzeln mit dem Verwaltungsserver (100) verbunden sind.

## Revendications

1. Système de point de vente, POS, (500a) comprenant :
un serveur de gestion (100), un premier appareil terminal POS (301), un deuxième appareil terminal POS (401) connecté au premier appareil terminal POS (301), un appareil (200) de traitement des espèces, et un écran tactile (250) pour l'appareil (200) de traitement des espèces, dans lequel le premier appareil terminal POS (301) et le deuxième appareil POS (401) sont connectés individuellement au serveur de gestion (100) ;
le premier appareil terminal POS incluant :
une interface de communication (310f), dans lequel l'écran tactile (250) et l'appareil (200) de traitement des espèces sont chacun connectés à l'interface de communication (310f),
une première unité de comptabilité (311) qui enregistre un premier article à acheter, calcule un premier montant de paiement pour le premier article enregistré, et envoie des informations de paiement concernant le premier montant de paiement à une unité (315) de traitement des paiements incluse dans le premier appareil terminal POS, l'unité (315) de traitement des paiements incluant une unité (315a) de gestion d'informations de paiement et une unité (315b) d'exécution du traitement des espèces ;
le deuxième appareil terminal POS (401) incluant une deuxième unité de comptabilité (411) qui enregistre un deuxième article à acheter, calcule un deuxième montant de paiement pour le deuxième article enregistré, et envoie des informations de paiement concernant le deuxième montant de paiement à l'unité (315) de traitement des paiements du premier appareil terminal POS (301) ; et
l'appareil (200) de traitement des espèces incluant une unité (211) d'acceptation des paiements qui accepte l'argent reçu, compte l'argent reçu, et notifie au premier appareil terminal POS (301) un montant de l'argent reçu compté, et une unité (212) de distribution d'espèces qui distribue de la monnaie selon une demande du premier appareil terminal POS (301) ;
dans lequel l'unité (315a) de gestion d'informations de paiement conserve les informations de paiement reçues en provenance du premier appareil terminal POS (301) et du deuxième appareil terminal POS (401), gère les informations de paiement, affiche les informations de paiement par ordre de réception sur l'écran tactile (250), et accepte la spécification des informations de paiement indiquées sur l'écran tactile (250) ;
dans lequel l'unité (315b) d'exécution du traitement des espèces calcule la monnaie sur la base de celui parmi le premier ou le deuxième montant de paiement qui correspond aux informations de paiement spécifiées et du montant de l'argent reçu dont le premier appareil terminal POS (301) a été notifié par l'appareil (200) de traitement des espèces et amenant, sur la base des informations de paiement spécifiées, l'appareil (200) de traitement des espèces à mettre en oeuvre un traitement qui inclut l'acceptation de l'argent reçu, le comptage de l'argent reçu, et la distribution de la monnaie ; et
dans lequel le premier appareil terminal POS (301) et le deuxième appareil terminal POS (401) fournissent chacun au serveur de gestion (100) un relevé des ventes de leurs ventes.

2. Procédé de paiement comprenant :
l'enregistrement, par une première unité de comptabilité (311) d'un premier appareil terminal POS (301), d'un premier article à acheter ;
le calcul, par la première unité de comptabilité (311), d'un premier montant de paiement pour le premier article enregistré ;
l'envoi, par la première unité de comptabilité (311), d'informations de paiement concernant le premier montant de paiement à une unité (315) de traitement des paiements du premier appareil terminal POS (301), l'unité (315) de traitement des paiements incluant une unité (315a) de gestion d'informations de paiement et une unité (315b) d'exécution du traitement des espèces ;
l'enregistrement, par une deuxième unité de comptabilité (411) d'un deuxième appareil terminal POS (401) connecté au premier appareil terminal POS (301), d'un deuxième article à acheter ;
le calcul, par la deuxième unité de comptabilité (411), d'un deuxième montant de paiement pour le deuxième article enregistré ;
l'envoi, par la deuxième unité de comptabilité (411), d'informations de paiement concernant le deuxième montant de paiement à l'unité (315) de traitement des paiements du premier appareil terminal POS (301) ;
la conservation, par l'unité (315a) de gestion d'informations de paiement, des informations de paiement reçues à partir du premier appareil terminal POS (301) et du deuxième appareil terminal POS (401), la gestion des informations de paiement, l'affichage des informations de paiement dans l'ordre de réception sur un écran tactile (250) connecté au premier appareil terminal POS (301), et l'acceptation de la spécification des informations de paiement indiquées sur l'écran tactile (250) ;
l'acceptation, par une unité (211) d'acceptation des paiements d'un appareil (200) de traitement des espèces connecté au premier appareil terminal POS (301), de l'argent reçu, le comptage de l'argent reçu et la notification au premier appareil terminal POS (301) d'un montant de l'argent reçu compté ;
le calcul, par l'unité (315b) d'exécution du traitement des espèces, de la monnaie sur la base du premier ou du deuxième montant de paiement correspondant aux informations de paiement spécifiées et du montant de l'argent reçu dont le premier appareil terminal POS (301) a été notifié par l'appareil (200) de traitement des espèces ; et
la distribution, par une unité (212) de distribution d'espèces de l'appareil (200) de traitement des espèces, de la monnaie en fonction d'une demande émanant du premier appareil terminal POS (301) ;
dans lequel le premier appareil terminal POS (301) et le deuxième appareil terminal POS (401) fournissent chacun à un serveur de gestion (100) un relevé de ventes de leurs ventes, le premier appareil terminal POS (301) et le deuxième appareil terminal POS (401) étant connectés individuellement au serveur de gestion (100).
